# EUROPÄISCHE PATENTSCHRIFT

(11) **EP 3 409 500 B1**
(45) Veröffentlichungstag und Bekanntmachung des Hinweises auf die Patenterteilung: **26.05.2021**
(21) Anmeldenummer: 18174833.6
(22) Anmeldetag: 29.05.2018
(51) Int. Cl.: B42D 25/387, B42D 25/382, B42D 25/378, B42D 25/45, B42D 25/485, G09F 3/00, C09D 11/50

(54) **ANORDNUNG, GEGENSTAND MIT EINEM SICHERHEITSMERKMAL UND VERFAHREN ZUM HERSTELLEN EINER ANORDNUNG FÜR EIN SICHERHEITSMERKMAL**
ARRANGEMENT, ARTICLE HAVING A SECURITY FEATURE AND METHOD OF MANUFACTURING AN ASSEMBLY FOR A SECURITY FEATURE
DISPOSITIF, OBJET POURVU DE CARACTÉRISTIQUE DE SÉCURITÉ ET PROCÉDÉ DE FABRICATION D'UN DISPOSITIF POUR UNE CARACTÉRISTIQUE DE SÉCURITÉ

(30) Priorität: 01.06.2017 DE 102017112119
(43) Veröffentlichungstag der Anmeldung: 05.12.2018
(73) Patentinhaber: Schreiner Group GmbH & Co. KG, 85764 Oberschleissheim (DE)
(72) Erfinder: Weiß, Oliver, 80995 München (DE); Lampka, Nadine, 80993 München (DE)
(74) Vertreter: Epping - Hermann - Fischer

(56) Entgegenhaltungen:
- EP-A1- 0 930 352
- EP-A1- 3 150 763
- WO-A1-2015/122895
- DE-T2- 60 315 049
- US-A1- 2013 181 144

## Beschreibung

Die vorliegende Erfindung betrifft eine Anordnung, die insbesondere als Sicherheitsmerkmal für einen Gegenstand, beispielsweise für ein Sicherheitsetikett dient, um auf Basis des Sicherheitsmerkmals ein Bestätigen einer Originalität eines Gegenstandes zu ermöglichen und zu einem erhöhten Manipulationsschutz beizutragen. Die vorliegende Erfindung betrifft außerdem ein Etikett oder einen sonstigen Gegenstand, der eine solche Anordnung als Sicherheitsmerkmal aufweist, sowie ein Verfahren zum Herstellen einer Anordnung für ein Sicherheitsmerkmal.

Etiketten bieten insbesondere als kennzeichnendes Medium eine Vielzahl von Einsatzmöglichkeiten. Zum Beispiel können Sicherheitsetiketten einer Autorisierung oder einem Herkunftsnachweis dienen und dort zum Einsatz kommen, wo es zweckdienlich ist, Gegenstände zu verifizieren und ihre Originalität auszuzeichnen. In diesem Zusammenhang sind ein hoher Manipulationsschutz für Sicherheitsetiketten und ein zuverlässiges Kennzeichnen der Originalität eines Gegenstandes wünschenswert.

Das Dokument EP 3 150 763 A1 offenbart ein Produkt mit einer Substanz, die ihre optischen oder magnetischen Eigenschaften temperaturabhängig ändern kann.

Ferner offenbaren die Dokumente WO 2015/122895 A1 und DE 603 15 049 T2 Sicherheitsdokumente.

Es ist daher die Aufgabe der Erfindung, eine als Sicherheitsmerkmal verwendbare Anordnung, ein damit versehenes Sicherheitsetikett oder einen sonstigen Gegenstand sowie ein Verfahren zum Herstellen der Anordnung bereitzustellen, um ein noch sichereres und zuverlässigeres Erkennen der Originalität eines Gegenstandes zu ermöglichen und zu einem verbessertem Manipulationsschutz beizutragen.

Die Aufgabe wird durch die Merkmale der Patentansprüche 1, 13 und 14 gelöst. Vorteilhafte Ausgestaltungen sind insbesondere in den Unteransprüchen angegeben.

Gemäß einem Aspekt der Erfindung ist eine Anordnung in Anspruch 1 definiert.

Mittels des Lumineszenzfarbstoffs ist ein temperaturabhängiges Sicherheitsmerkmal in oder an einem Gegenstand realisierbar, welches ein einfaches und zuverlässiges Überprüfen der Echtheit des Gegenstandes ermöglicht. Dabei umfasst der Gegenstand zumindest die beschriebene Komponente, welche beispielsweise als Faser, Papierelement oder Etikettenschicht ausgebildet ist.

Der erste Zustand repräsentiert insbesondere eine erste Temperatur der Anordnung beziehungsweise des temperaturabhängigen Lumineszenzfarbstoffs an oder in der Komponente im Zusammenhang mit dem ersten Farbort. Zum Beispiel ist in dem ersten Zustand der erste Farbort bei Raumtemperatur definiert. Der zweite Zustand repräsentiert eine von dem ersten Zustand unterschiedliche Gegebenheit, sodass der zweite Farbort beispielsweise bei negativen Celsius-Temperaturen definiert ist und sich deutlich erkennbar von dem ersten Zustand und dem ersten Farbort unterscheidet. Alternativ können der erste und zweite Zustand sowie der erste und zweite Farbort des temperaturabhängigen Lumineszenzfarbstoffs auch bei anderen Temperaturen vorgegeben ausgebildet sein. Außerdem kann der Lumineszenzfarbstoff im Rahmen der vorliegenden Erfindung auch als Lumineszenzfarbe bezeichnet sein.

Der jeweilige Farbort ist zum Beispiel gemäß dem CIE-Normvalenzsystem oder CIE-Normfarbsystem von der Internationalen Beleuchtungskommission (franz.: Commission internationale de l'eclairage, CIE) definiert und stellt eine Relation zwischen der menschlichen Farbwahrnehmung und den physikalischen Ursachen des Farbreizes her. Es erfasst somit die Gesamtheit wahrnehmbarer Farben. Unter Nutzung von Farbraumkoordinaten kann ein Farbort in einem CIE-Farbraum eingeordnet werden.

Der temperaturabhängige (erste) Lumineszenzfarbstoff ist zum Beispiel bei der Herstellung eines Gegenstandes beziehungsweise der Komponente dem zugehörigen Rohmaterial beigemischt oder wird auf die ausgestaltete und bereitgestellte Komponente aufgebracht, sodass ihr jeweiliger Farbort optisch erkennbar ist. Dabei kann die Formulierung "optisch erkennbar" ein Detektieren des Farbortes mit einer dazu befähigten Sensorik umfassen, aber insbesondere auch ein Erkennen der unterschiedlichen Farborte mit dem menschlichen Auge umfassen. Beispielsweise ist der erste Farbort bei einer Raumtemperatur von etwa 21°C mit einer dominanten Wellenlänge von etwa 610 nm vorgegeben bzw. ausgebildet, welche dem menschlichen Auge als rot-orange erscheint. Der temperaturabhängige Lumineszenzfarbstoff ist dann beispielsweise so ausgestaltet, dass der zweite Farbort bei einer Temperatur von -30°C eine dominante Wellenlänge von etwa 580 nm aufweist, welche von dem menschlichen Auge als gelb-grünlich wahrgenommen wird. Anstelle dieser exemplarischen Farborte bzw. Wellenlängen können auch beliebige andere gewählt werden, etwa solche bei 550 und 625 nm.

Der temperaturabhängige Lumineszenzfarbstoff, welcher bei verschiedenen Temperaturen unterschiedliche Farborte aufweist, umfasst beispielsweise thermochrome Pigmente, die zum Beispiel einer druck-, pump- oder sprühfähigen Substanz beigemischt sind, mit der die Komponente ausgebildet oder beaufschlagt wird.

Die beschriebene Anordnung ermöglicht eine Prüfung verborgener Lumineszenz. Aufgrund des temperaturabhängigen Lumineszenzfarbstoffs und der ausbildbaren, unterschiedlichen Farborte kann ein Prüfer im Prinzip zweifelsfrei die Änderung eines Farbortes feststellen. Beispielsweise wird die Anordnung mit Kältespray beaufschlagt, sodass der temperaturabhängige Lumineszenzfarbstoff seinen aktuellen, ersten Farbort ändert und gemäß der Temperatureinwirkung den zweiten Farbort annimmt. Ein solcher Farbübergang erfolgt kontinuierlich und ist zudem reversibel. Um einen deutlich erkennbaren Unterschied der Farborte zu erhalten, ist ein entsprechender Temperaturunterschied, der auf den Lumineszenzfarbstoff einwirkt, nutzbringend.

Mit einem handelsüblichen Kältespray kann zum Beispiel lokal eine Temperatur von -30°C verursacht werden, welche im Vergleich zu einer gewöhnlichen Raumtemperatur eine mehr als ausreichende Temperaturänderung bewirkt. Somit ist die beschriebene Anordnung mit einfachen und kostengünstigen Mitteln überprüfbar, sodass keine komplexen und kostspieligen Lesegeräte oder aufwendige Testvorrichtungen erforderlich sind, um die Echtheit der Anordnung zu überprüfen.

Ist beispielsweise die temperaturabhängige Lumineszenzfarbe in Form einer Druckfarbe alleine auf eine Oberfläche des Gegenstandes aufgedruckt, kann sie praktisch als Farbreferenz für sich selber verwendet werden, da sich ihre Farbe in den Bereichen ändert, in denen zum Beispiel eine lokale Beaufschlagung mit Kältespray erfolgt. In den sonstigen Bereichen, in denen das Kältespray nicht einwirkt, behält die Lumineszenzfarbe ihren ersten Farbort bei.

Gemäß einer bevorzugten Weiterbildung umfasst die Anordnung außerdem einen temperaturunabhängigen Lumineszenzfarbstoff, welcher einen vorgegebenen Farbort aufweist, der auf den ersten oder zweiten Farbort des temperaturabhängigen Lumineszenzfarbstoffs abgestimmt ist und welcher eine Referenzfarbe zu dem ersten oder zweiten Farbort des temperaturabhängigen Lumineszenzfarbstoffs ausbildet. Besonders bevorzugt sind die beiden Lumineszenzfarbstoffe in unmittelbarer Nähe oder angrenzend zueinander an der Komponente angeordnet oder in die Komponente integriert, damit ein möglichst direkter Vergleich der jeweiligen Farborte möglich ist.

Dadurch, dass zusätzlich zu der temperaturabhängigen Lumineszenzfarbe eine temperaturunabhängige Lumineszenzfarbe vorgesehen ist, können auch geringe Temperaturveränderungen einen erkennbaren Farbortwechsel der temperaturabhängigen Lumineszenzfarbe bewirken. Insbesondere in einem Übergangsbereich zwischen dem temperaturabhängigen und dem temperaturunabhängigen Lumineszenzfarbstoff ist aufgrund des Kontrastes zwischen den unterschiedlichen Farborten ein Farbunterschied einfacher zu erkennen, sodass die temperaturunabhängige Lumineszenzfarbe zu einem zuverlässigen und einfachen Überprüfen der Originalität der Anordnung beiträgt.

Die temperaturunabhängige Lumineszenzfarbe beziehungsweise der temperaturunabhängige Lumineszenzfarbstoff realisiert eine im Wesentlichen statische Referenzfarbe zu der veränderlichen temperaturunabhängigen Lumineszenzfarbe. In Bezug auf die Unabhängigkeit von Temperatureinwirkungen ist die temperaturunabhängige Lumineszenzfarbe so ausgebildet, dass zum Beispiel in einem Temperaturbereich von etwa -30°C bis 21°C keine Änderung des Farbortes oder der zugehörigen dominanten Wellenlänge im Rahmen einer derzeit üblichen Messgenauigkeit ermittelbar ist.

Vorzugsweise sind die beiden Lumineszenzfarbstoffe in unmittelbarer Nähe zueinander an oder in der Komponente angeordnet, sodass sich bei einer einwirkenden Temperaturänderung in dem Übergangsbereich kein kontinuierlicher Farbverlauf ausbildet, wie es zum Beispiel bei der alleinigen Verwendung der temperaturabhängigen Lumineszenzfarbe aufgrund eines kontinuierlichen Temperaturverlaufs möglich ist.

Ein Einführen und Verwenden der temperaturunabhängigen Lumineszenzfarbe als statische Referenzfarbe ist insbesondere vorteilhaft, wenn das mit der temperaturabhängigen Lumineszenzfarbe versehene Volumen oder die mit der temperaturabhängigen Lumineszenzfarbe bedeckte Fläche relativ klein ist. Durch Ausbilden einer Temperaturänderung, beispielsweise mittels Besprühen mit einem Kältespray, wird mitunter das gesamte Volumen oder die gesamte Fläche gekühlt.

Dadurch, dass die referenzierende Lumineszenzfarbe im Wesentlichen temperaturunabhängig ist, wird keine oder nur eine sehr geringe temperaturabhängige Änderung des zugehörigen Lumineszenzfarbortes ausgebildet. Der Farbort dieser Referenzlumineszenzfarbe ist vorteilhafterweise möglichst identisch mit dem ersten Farbort der temperaturabhängigen Lumineszenzfarbe bei Raumtemperatur vorgegeben bzw. ausgebildet, sodass uneingeweihte Personen, zu denen potentielle Fälscher gehören, möglichst wenig darauf aufmerksam gemacht werden, dass es sich um zwei unterschiedliche Lumineszenzfarben handelt. Die Echtheit wird beurteilt, indem bei Raumtemperatur geprüft wird, dass der erste Farbort der temperaturabhängigen Lumineszenzfarbe mit dem Farbort der temperaturunabhängigen Lumineszenzfarbe übereinstimmen. Weiter wird geprüft, ob sich bei Beaufschlagung mit einem Kältespray die jeweiligen Farborte der beiden Lumineszenzfarben optisch erkennbar voneinander unterscheiden.

Gegebenenfalls würde eine Person mit krimineller Absicht versuchen, eine Anordnung oder ein Etikett mit dem beschriebenen Sicherheitsmerkmal zu fälschen, indem es diese kopiert. Dabei würde die Person übersehen, dass zwei unterschiedliche Lumineszenzfarben vorhanden sind und insbesondere, dass eine temperaturabhängige Lumineszenzfarbe verarbeitet ist. Eine Kopie einer solchen Anordnung oder eines solchen Etiketts würde entsprechend keine Temperaturabhängigkeit des Farbortes aufweisen und kann somit sicher und zuverlässig als Fälschung erkannt werden.

Ein Anpassen der jeweiligen Farborte der temperaturabhängigen und temperaturunabhängigen Lumineszenzfarbe kann zum Beispiel wie folgt durchgeführt werden: In einem Schritt werden der erste Farbort der temperaturabhängigen Lumineszenzfarbe und der Farbort der temperaturunabhängigen Lumineszenzfarbe bei Raumtemperatur unter ultravioletter Beleuchtung aneinander angepasst. Zunächst werden zwei geeignete Lumineszenzfarben ausgewählt, deren Mischungslinie den Farbort der temperaturabhängigen Lumineszenzfarbe kreuzt. Zum Beispiel werden Lumineszenzfarben mit einer dominanten Wellenlänge im roten und gelben Spektralbereich gewählt, wenn ein orangener erster Farbort des temperaturabhängigen Lumineszenzfarbstoffs vorgesehen werden soll. In einem weiteren Schritt wird ein konkretes Mischungsverhältnis der ausgewählten Lumineszenzfarben ermittelt, bei dem der Farbort der Mischung dem ersten Farbort der temperaturabhängigen Lumineszenzfarbe entspricht. Die ausgebildete Mischung realisiert dann die referenzierende temperaturunabhängige Lumineszenzfarbe.

Die temperaturabhängige Lumineszenzfarbe ist beispielsweise als eine Farbvariante vorgegeben, welcher bei Bedarf temperaturunabhängige Fluoreszenzfarbe beigemischt werden kann, um zum Beispiel bei Raumtemperatur einen anderen Farbort darzustellen. Ein solches Beimischen ändert nicht die Temperaturabhängigkeit der temperaturabhängigen Fluoreszenz- beziehungsweise Lumineszenzfarbe, bewirkt aber eine Verschiebung der Farborte.

In einem weiteren Schritt wird ein Anpassen der jeweiligen Farborte bei Raumtemperatur unter Normallicht durchgeführt. Der Farbort der Referenzlumineszenzfarbe wird zum Beispiel unter D50-Normallicht an den ersten Farbort der temperaturabhängigen Lumineszenzfarbe unter demselben Normallicht angepasst. Die temperaturabhängige Lumineszenzfarbe ist üblicherweise weniger transparent beziehungsweise weißlicher ausgebildet als übliche temperaturunabhängige Lumineszenzfarben. Ein Anpassen der jeweiligen Farborte kann dadurch erreicht werden, dass der Referenzlumineszenzfarbe ein geeignetes weißliches Pigment beigemischt wird. Dies kann zum Beispiel durch Zugabe von Mischweiß erfolgen, das in diesem Zusammenhang eine geeignete Wahl darstellt, da Mischweiß keine optischen Aufheller in Form von blauen Lumineszenzfarben enthält, welche ein Anpassen der jeweiligen Farborte und Ausbilden einer Übereinstimmung bei Raumtemperatur unter ultraviolettem Licht stören würden.

Darüber hinaus ist darauf zu achten, dass ein Anpassen der jeweiligen Farborte bei Raumtemperatur unter Normallicht dazu führen kann, dass die jeweiligen Farborte bei Raumtemperatur unter ultravioletter Beleuchtung nicht mehr übereinstimmen. Dies kann zum Beispiel auch unter Verwendung von Mischweiß und trotz Vorgabe eines Toleranzbereichs für noch zulässige Abweichungen der jeweiligen Farborte der Fall sein, sodass eine Übereinstimmung selbst innerhalb eines solchen Toleranzbereichs nicht mehr erfüllt ist und die jeweiligen Farborte unter ultraviolettem Licht nicht mehr übereinstimmen. In diesem Fall ist es zielführend; in einem weiteren Schritt einen iterativen Prozess durchzuführen, in dem bei Raumtemperatur abwechselnd die jeweiligen Farborte unter ultraviolettem Licht und unter Normallicht aufeinander abgestimmt werden, bis eine gewünschte Übereinstimmung in beiden Fällen erreicht ist.

Die jeweiligen Farborte des temperaturabhängigen und des temperaturunabhängigen Lumineszenzfarbstoffs können darüber hinaus in Abhängigkeit eines vorgegebenen Blickwinkels aufeinander abgestimmt sein. Die temperaturabhängige Fluoreszenz oder Lumineszenz weist eine andere Blickwinkelabhängigkeit auf als übliche Fluoreszenzfarben. Somit ermöglicht die beschriebene Anordnung mit dem temperaturabhängigen Lumineszenzfarbstoff eine zusätzliche Möglichkeit der Authentifizierung beziehungsweise Echtheitsprüfung. Werden die Fluoreszenzfarborte der beiden Fluoreszenzfarben in Aufsicht zueinander abgestimmt, dann zeigt sich in einer von der Aufsicht abweichenden Schrägsicht ein deutlich erkennbarer Unterschied hinsichtlich der Farbwirkung. Eine solche blickwinkelabhängige Farbwirkung kann mittels einer Farbintensität oder Sättigung als quantitative Maßzahl der jeweiligen Farbe geeignet beschrieben werden. In Bezug auf unterschiedliche Ansicht auf die jeweiligen Fluoreszenzfarben kann die zugehörige Sättigung einen Unterschied zwischen den beiden Fluoreszenzfarben von zum Beispiel 50 % aufweisen, sodass auf einfache Weise mittels Kippen der Anordnung oder des Etiketts überprüft werden kann, ob eine temperaturabhängige Fluoreszenzfarbe vorliegt.

Gemäß einer Weiterbildung ist zumindest ein Lumineszenzfarbstoff als Fluoreszenzfarbstoff ausgebildet. Bevorzugt sind sowohl der temperaturabhängige als auch der temperaturunabhängige Lumineszenzfarbstoff als Fluoreszenzfarbstoff ausgebildet. Alternativ können einer oder beide Lumineszenzfarbstoffe jeweils als Phosphoreszenzfarbstoff ausgebildet sein. Im Rahmen der vorliegenden Erfindung können insbesondere Ausgestaltungen und Eigenschaften der temperaturabhängigen und/oder temperaturunabhängigen Fluoreszenzfarbe beschrieben werden, welche aber auch auf die verallgemeinernden temperaturabhängigen und/oder temperaturunabhängigen Lumineszenzfarben beziehungsweise Lumineszenzfarbstoffe übertragbar sind. Der Lumineszenzfarbstoff ist zum Beispiel so ausgebildet, dass er mittels ultravioletter Strahlungseinwirkung zur Lumineszenz anregbar ist.

Besonders bevorzugt ist zumindest ein Lumineszenzfarbstoff mittels Aufdrucken oder Aufsprühen an der Komponente angeordnet. Beispielsweise ist der Lumineszenzfarbstoff als Druck- oder Lackfarbe ausgebildet und kann eine Oberfläche der Komponente teilweise oder vollständig bedecken.

Vorteilhafterweise ist die Komponente in einem spektralen Bereich von dem ersten Farbort bis einschließlich dem zweiten Farbort des temperaturabhängigen Lumineszenzfarbstoffs optisch transparent ausgebildet ist. Auf diese Weise kann das von dem Farbstoff ausgehende Licht die Komponente mehr oder weniger verlustfrei verlassen, sodass zu einer zuverlässigen Erkennbarkeit des jeweiligen Farbortes beigetragen wird.

Die Komponente der Anordnung, welche den Lumineszenzfarbstoff oder die Lumineszenzfarbstoffe umfasst, ist zum Beispiel als ein Teil einer Faser, eines Thermoplasts, eines Papierelements oder einer Etikettenanordnung realisiert.

Ein weiterer Aspekt der Erfindung betrifft eine Etikettenanordnung für ein Sicherheitsetikett, welches eine Ausgestaltung der zuvor beschriebenen Anordnung umfasst. Die Komponente der Anordnung ist als eine Etikettenschicht ausgebildet und der temperaturabhängige Lumineszenzfarbstoff ist auf einer Oberfläche der Etikettenschicht angeordnet oder in die Etikettenschicht eingebracht. Die Etikettenschicht kann ein papier- oder folienbasierter Träger sein oder eine Lage eines ein- oder mehrschichtigen Etiketts realisieren.

Gemäß einer bevorzugten Weiterbildung weist die Etikettenanordnung auch den temperaturunabhängigen Lumineszenzfarbstoff auf, welcher besonders bevorzugt neben beziehungsweise angrenzend zu dem temperaturabhängigen Lumineszenzfarbstoff auf einer Oberfläche der Etikettenschicht angeordnet oder in die Etikettenschicht integriert ist.

Vorzugsweise ist mindestens ein Lumineszenzfarbstoff an einer oder mehreren vorgegebenen Positionen mit einer vorgegebenen Geometrie auf der Etikettenschicht aufgedruckt oder aufgesprüht. Darüber hinaus kann es in Bezug auf ein realisierbares Sicherheitsetikett von Vorteil sein, dass die vorgegebene Geometrie des temperaturabhängigen und/oder des temperaturunabhängigen Lumineszenzfarbstoffs ein vorgegebenes Streumuster umfasst. Ein solches Streumuster kann eine gewollte Positionsungenauigkeit und/oder eine gezielt ausgebildete Verkippung umfassen und zu einer erhöhten Sicherheit eines Sicherheitsetiketts beziehungsweise der Anordnung beitragen.

Mittels des Streumusters wird ein Beitrag zum Vermeiden von Auffälligkeiten geleistet, dass zwei unterschiedliche Fluoreszenzfarben vorliegen. Dies betrifft zum Beispiel eine Passerungenauigkeit im Rahmen eines Druckverfahrens. Durch gezieltes, zufälliges Variieren der relativen Position der beiden Lumineszenzfarben zueinander und/oder einer Verkippung relativ zueinander oder bezogen auf eine Mittelachse der Anordnung wird ein Variationsbereich ausgebildet, welcher den Eindruck vermitteln kann, dass lediglich eine Farbe verwendet wurde. Geeignete Grenzen eines solchen Variationsbereichs liegen beispielsweise im Bereich einer Passerungenauigkeit von etwa ± 0,1 mm und 1-2 Grad, sodass der Variationsbereich vorzugsweise der Ungenauigkeit typischer Streuungen entspricht. Auf diese Weise ist bezogen auf ein Druckerzeugnis, wie eine Etikettenanordnung, jeweils keine systematische Relation zwischen der Position und der Verkippung der temperaturabhängigen Fluoreszenzfarbe zur Referenzfluoreszenzfarbe erkennbar.

Gemäß einer Weiterbildung kann die Etikettenanordnung zusätzlich zu dem temperaturunabhängigen Lumineszenzfarbstoff einen weiteren temperaturunabhängigen, weiteren bzw. dritten Lumineszenzfarbstoff umfassen, welcher vorzugsweise auch angrenzend zu dem temperaturabhängigen Lumineszenzfarbstoff an der Etikettenschicht angeordnet oder in die Etikettenschicht integriert ist. Der temperaturunabhängige, zweite Lumineszenzfarbstoff weist einen vorgegebenen Farbort auf, der auf den ersten oder den zweiten Farbort des temperaturabhängigen Lumineszenzfarbstoffs abgestimmt ist und eine Referenzfarbe für diesen Ort ausbildet. Der weitere temperaturunabhängige Lumineszenzfarbstoff weist auch einen vorgegebenen Farbort auf, der auf den anderen, also den zweiten oder ersten Farbort des temperaturabhängigen Lumineszenzfarbstoffs abgestimmt ist und eine entsprechende Referenzfarbe zu dem jeweiligen Farbort ausbildet.

Die Etikettenanordnung kann zusätzlich zu dem temperaturabhängigen Sicherheitsmerkmal eine oder mehrere Sicherheitslagen oder weitere Sicherheitsmerkmale aufweisen, welche einen Manipulationsschutz bieten beziehungsweise anhand derer eine versuchte Manipulation ersichtlich ist. Solche weiteren Sicherheitsmerkmale können zum Beispiel so ausgebildet sein, dass bei einem unbefugten Entfernen der applizierten Etikettenanordnung von dem gekennzeichneten Gegenstand eine Etikettenschicht an bestimmten Positionen einreißt.

Ein weiterer Aspekt der Erfindung betrifft einen in Anspruch 13 definierten Gegenstand, insbesondere mit einer Ausgestaltung der zuvor beschriebenen Etikettenanordnung, welche an dem Gegenstand appliziert ist. Mittels der Etikettenanordnung kann der Gegenstand einfach und sicher gekennzeichnet werden, und auf Basis des temperaturabhängigen Sicherheitsmerkmals ist ein zuverlässiges Erkennen der Originalität des gekennzeichneten Gegenstandes möglich. Die Etikettenanordnung realisiert zum Beispiel ein selbstklebendes Etikett, welches einen Träger mit aufgedrucktem temperaturabhängigem Lumineszenzfarbstoff umfasst, der an seiner Unterseite eine Klebstoffschicht aufweist, die ein adhäsives Befestigen des Etiketts an dem Gegenstand ermöglicht und die beispielsweise vor einem Gebrauch mit einem Silikonpapier bedeckt ist.

Gemäß einem weiteren Aspekt der Erfindung ist ein Verfahren zum Herstellen einer Anordnung in Anspruch 14 definiert.

Insbesondere kann das Verfahren außerdem ein Bereitstellen eines temperaturunabhängigen Lumineszenzfarbstoffs umfassen, welcher einen vorgegebenen Farbort aufweist, der auf den ersten oder zweiten Farbort des temperaturabhängigen Lumineszenzfarbstoffs abgestimmt ist. Gemäß einer solchen Weiterbildung umfasst das Verfahren weiter ein Aufbringen des temperaturunabhängigen Lumineszenzfarbstoffs auf einer Oberfläche der Etikettenschicht, vorzugsweise an einer Position benachbart beziehungsweise angrenzend zu dem aufgebrachten temperaturabhängigen Lumineszenzfarbstoff.

Das beschriebene Verfahren dient insbesondere der Herstellung einer der zuvor beschriebenen Etikettenanordnungen, sodass sämtliche Merkmale und Eigenschaften der Etikettenanordnung, sofern zutreffend, auch für das Herstellungsverfahren offenbart sind und umgekehrt.

Besonders bevorzugt sind der temperaturabhängige Lumineszenzfarbstoff und, sofern vorgesehen, der temperaturunabhängige Lumineszenzfarbstoff als druck- oder sprühfähige Substanz bereitgestellt, sodass im Rahmen des Verfahrens das Aufbringen des mindestens einen Lumineszenzfarbstoffs ein Aufdrucken oder Aufsprühen des jeweiligen Lumineszenzfarbstoffs auf die Oberfläche der Etikettenschicht umfasst.

Insbesondere können die beiden Lumineszenzfarbstoffe im Rahmen des Verfahrens aufeinander abgestimmt werden, um ein nutzbringendes Sicherheitsmerkmal für ein Sicherheitsetikett zu realisieren und zu einem zuverlässigen Erkennen der Echtheit der Etikettenanordnung und des damit versehenen Gegenstandes beizutragen.

Ein solches Anpassen der beiden Lumineszenzfarbstoffe aneinander kann gemäß einer Weiterbildung des Verfahrens dadurch erfolgen, dass das Bereitstellen des temperaturabhängigen und des temperaturunabhängigen Lumineszenzfarbstoffs ein Ausbilden des ersten Farbortes des temperaturabhängigen Lumineszenzfarbstoffs bei Raumtemperatur unter ultraviolettem Licht und ein Ausbilden des Farbortes des temperaturunabhängigen Lumineszenzfarbstoffs bei Raumtemperatur unter ultraviolettem Licht umfasst. Dabei umfasst das Verfahren weiter ein Anpassen des Farbortes des temperaturunabhängigen Lumineszenzfarbstoffs an den ersten Farbort des temperaturabhängigen Lumineszenzfarbstoffs und ein Überprüfen der jeweiligen Farborte der beiden Lumineszenzfarbstoffe bei Raumtemperatur unter Normallicht. Wenn ermittelt wird, dass die jeweiligen Farborte unter dem jeweiligen Licht innerhalb eines Toleranzbereichs nicht übereinstimmen, umfasst das Verfahren weiter ein iteratives Abstimmen der jeweiligen Farborte der beiden Lumineszenzfarbstoffe aufeinander bei Raumtemperatur unter Normallicht und unter ultraviolettem Licht, bis eine tolerierbare Übereinstimmung der jeweiligen Farborte unter Normallicht und ultraviolettem Licht erreicht ist.

Im Zusammenhang mit dem iterativen Abstimmen der jeweiligen Farborte der beiden Lumineszenzfarbstoffe aufeinander kann der Farbort des temperaturunabhängigen Lumineszenzfarbstoffs durch Beimischen eines weißlichen Farbpigments zu dem temperaturunabhängigen Lumineszenzfarbstoff gezielt geändert werden. Ein solches Beimischen, zum Beispiel von Mischweiß, kann solange durchgeführt werden, bis im Rahmen des Überprüfens der jeweiligen Farborte der beiden Lumineszenzfarbstoffe bei Raumtemperatur unter Normallicht und unter ultraviolettem Licht festgestellt wird, dass die Farborte ausreichend genug übereinstimmen.

Außerdem kann das Verfahren zur Herstellung der Etikettenanordnung auch noch ein Aufbringen einer Klebstoffschicht an einer Unterseite der Etikettenschicht umfassen, welche ein einfaches und zuverlässiges Befestigen der Etikettenanordnung an einem dafür vorgesehenen Gegenstand ermöglicht. Darüber hinaus kann die Etikettenanordnung auch noch weitere Schichten oder Lagen aufweisen, wie zum Beispiel eine Schutzfolie, die eine aufgebrachte Beschriftung beziehungsweise Bedruckung vor äußeren Einflüssen und Verschmutzung schützt. Im Rahmen des Herstellungsverfahrens können die einzelnen Lagen und Schichten zum Beispiel bereitgestellt, aufeinander angeordnet und miteinander gekoppelt werden.

Ausführungsbeispiele der Erfindung sind im Folgenden anhand der schematischen Zeichnungen näher erläutert. Es zeigen:
- Figuren 1A-1C: ein Ausführungsbeispiel einer Anordnung mit einem temperaturabhängigen Sicherheitsmerkmal,
- Figuren 2A-2F: verschiedene Ausführungsbeispiele einer Etikettenanordnung für ein Sicherheitsetikett,
- Figuren 3A-3D: ein unter Ausnutzung einer Blickwinkelabhängigkeit vorgeschlagenes temperaturabhängiges Sicherheitsmerkmal,
- Figur 4: ein Ausführungsbeispiel für ein Ablaufdiagramm zum Herstellen einer Etikettenanordnung für ein Sicherheitsetikett,
- Figur 5A und 5B: ein schematisch vereinfachtes Beispiel eines ersten, temperaturabhängigen Lumineszenzstoffs, dessen Lumineszenzspektrum zwei Spektrallinien mit gegenläufig temperaturabhängigen Intensitäten umfasst,
- Figur 6A und 6B: ein gemessenes Lumineszenzspektrum eines temperaturabhängigen Lumineszenzstoffs mit gegenläufig temperaturabhängigen Intensitäten zweier Spektrallinien bei 550 und 625 nm und
- Figur 7: eine tabellarische Auflistung der verwendeten Bezeichnungen für die jeweiligen Farborte des ersten, zweiten und dritten Lumineszenzstoffs in Abhängigkeit von der Beleuchtung und der Temperatur.

Elemente gleicher Konstruktion oder Funktion sind figurenübergreifend mit den gleichen Bezugszeichen gekennzeichnet. Aus Gründen der Übersichtlichkeit sind die dargestellten Elemente gegebenenfalls nicht in allen Figuren mit Bezugszeichen gekennzeichnet.

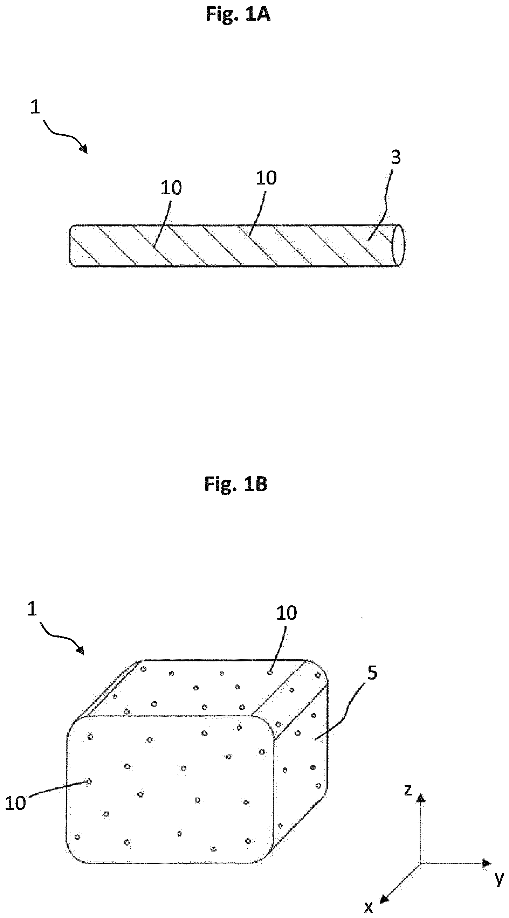

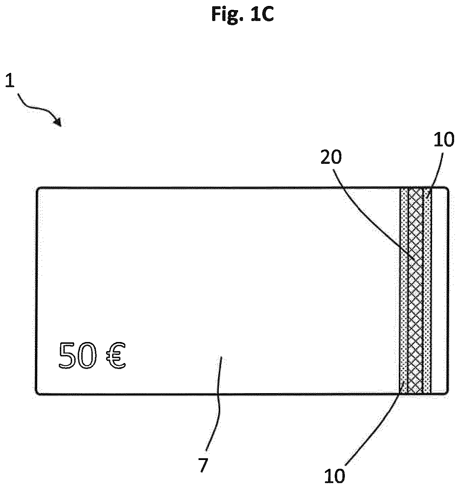

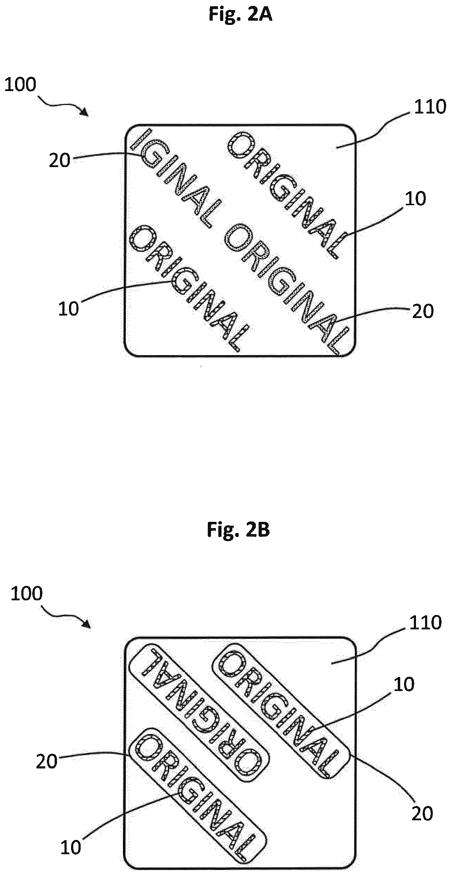

Die Figuren 1A bis 1C zeigen schematisch ein Ausführungsbeispiel einer Anordnung 1 mit einem temperaturabhängigen Sicherheitsmerkmal, das mittels eines temperaturabhängigen Fluoreszenzfarbstoffs 10 beziehungsweise Fluoreszenzfarbe 10 realisiert ist. Die Anordnung 1 umfasst jeweils eine Komponente 3 (s. Figur 1A), 5 (s. Figur 1B), 7 (s. Figur 1C) oder 110 (s. Figuren 2A-2F) und einen temperaturabhängigen Lumineszenzfarbstoff, welcher zum Beispiel als Fluoreszenzfarbstoff oder Fluoreszenzfarbe 10 realisiert ist. In einem ersten Zustand weist die temperaturabhängige Fluoreszenzfarbe 10 einen vorgegebenen ersten Farbort und in einem zweiten Zustand einen von dem ersten Farbort unterschiedlichen, vorgegebenen zweiten Farbort auf. Die temperaturabhängige Fluoreszenzfarbe 10 ist derart an der Komponente 3, 5, 7 oder 110 angeordnet oder in die Komponente 3, 5, 7 oder 110 integriert, dass sie in Abhängigkeit von einer auf sie einwirkenden Temperaturänderung ihren Zustand von dem ersten in den zweiten Zustand wechselt und dabei eine optisch erkennbare Farbänderung von dem ersten Farbort hin zum zweiten Farbort ausbildet.

Figur 1A illustriert die Komponente als Faser 3, welche die temperaturabhängige Fluoreszenzfarbe 10 zum Beispiel in Form eines eingefärbten mitverarbeiteten Fadens aufweist. Alternativ ist die Faser 3 zum Beispiel an einer Oberfläche mit der temperaturabhängigen Fluoreszenzfarbe 10 versehen. Figur 1B illustriert einen Thermoplast 5, welcher als Kunststoffformteil im Rahmen eines Spritzgussverfahrens hergestellt sein kann. Die temperaturabhängige Fluoreszenzfarbe 10 ist zum Beispiel in Form einer Vielzahl von thermochromen Farbpigmenten einem Rohmaterial zum Ausbilden des Thermoplasts 5 beigemischt und somit in dem Kunststoffformteil integriert. Figur 1C illustriert ein Papierelement 7, welches zum Beispiel eine Banknote realisiert, die neben der temperaturabhängigen Fluoreszenzfarbe 10 in Form zweier Streifen einen dazwischen liegenden Streifen aufweist, welcher aus einem temperaturunabhängigen Lumineszenz- und insbesondere Fluoreszenzfarbstoff 20 gebildet ist.

Der temperaturunabhängige Fluoreszenzfarbstoff 20 (im Folgenden gegebenenfalls auch als Fluoreszenzfarbe 20 bezeichnet) weist einen vorgegebenen Farbort auf, der auf den ersten oder den zweiten Farbort des temperaturabhängigen Fluoreszenzfarbstoffs 10 abgestimmt ist. Die temperaturunabhängige Fluoreszenzfarbe 20 bildet eine statische Referenzfarbe zu dem ersten oder zweiten Farbort der temperaturabhängigen Fluoreszenzfarbe 10 aus und ist bevorzugt angrenzend oder in unmittelbarer Nähe zu dem temperaturabhängigen Fluoreszenzfarbstoff 10 an der Komponente angeordnet oder in die Komponente integriert, sodass ein möglichst direkter Vergleich der jeweiligen Farborte möglich ist.

Mittels des Fluoreszenzfarbstoffs 10 ist ein temperaturabhängiges Sicherheitsmerkmal in oder an einem Gegenstand realisierbar, welches ein einfaches und zuverlässiges Überprüfen einer Echtheit des Gegenstandes ermöglicht. Dabei umfasst der Gegenstand zumindest die beschriebene Komponente 3, 5, 7 oder 110, welche beispielsweise als Faser 3, Papierelement 7 oder Etikettenschicht 110 ausgebildet ist.

Der erste Zustand repräsentiert einen Zustand mit einer ersten Temperatur der Anordnung 1 beziehungsweise des temperaturabhängigen Fluoreszenzfarbstoffs 10, bei welcher dieser den ersten Farbort aufweist. Zum Beispiel ist in dem ersten Zustand der erste Farbort bei üblicher Raum- oder Zimmertemperatur definiert. Der zweite Zustand repräsentiert einen von dem ersten Zustand unterschiedlichen Zustand, beispielsweise bei einer negativen Celsius-Temperatur, bei der die temperaturabhängige Fluoreszenzfarbe 10 den zweiten Farbort aufweist, der sich deutlich erkennbar von dem ersten Zustand und dem ersten Farbort unterscheidet.

Die Figuren 2A bis 2F zeigen Ausführungsbeispiele einer Etikettenanordnung 100 mit einer Etikettenschicht 110, auf der oder in der die temperaturabhängige Fluoreszenzfarbe 10 sowie eine temperaturunabhängige Fluoreszenzfarbe 20 auf- oder eingebracht sind. Die Fluoreszenzfarben 10, 20 sind vorzugsweise als druckfähige Substanzen ausgebildet und können im Rahmen eines Druckverfahrens an einer oder mehreren vorgegebenen Positionen und mit vorgegebener Geometrie auf der Anordnung 1 beziehungsweise der Etikettenschicht 110 aufgetragen werden. Als Druckverfahren geeignet sind unter anderem ein Flexodruck, ein Siebdruck (zum Beispiel als Flachbett sowie rotativ), ein Offsetdruck und ein Inkjetdruck.

Die vorgegebene Geometrie umfasst zum Beispiel einen vorgegebenen Schriftzug, der mit der jeweiligen Fluoreszenzfarbe 10 oder 20 ausgebildet ist. Gemäß Figur 2A sind alternierend jeweils eine Reihe des dargestellten Schriftzugs mit der temperaturabhängigen Fluoreszenzfarbe 10 und eine Reihe mit der temperaturunabhängigen Fluoreszenzfarbe 20 ausgestaltet. Die temperaturunabhängige Fluoreszenzfarbe 20 bildet eine zu der temperaturabhängigen Fluoreszenzfarbe 10 benachbarte Referenzfluoreszenzfarbe aus.

In Figur 2B ist ein weiteres Ausführungsbeispiel der Etikettenanordnung 100 illustriert, bei dem die dargestellten Schriftzüge jeweils mit der temperaturabhängigen Fluoreszenzfarbe 10 ausgebildet und jeweils von einem Rahmen umgeben sind, welcher mit der temperaturunabhängigen Fluoreszenzfarbe 20 ausgestaltet ist.

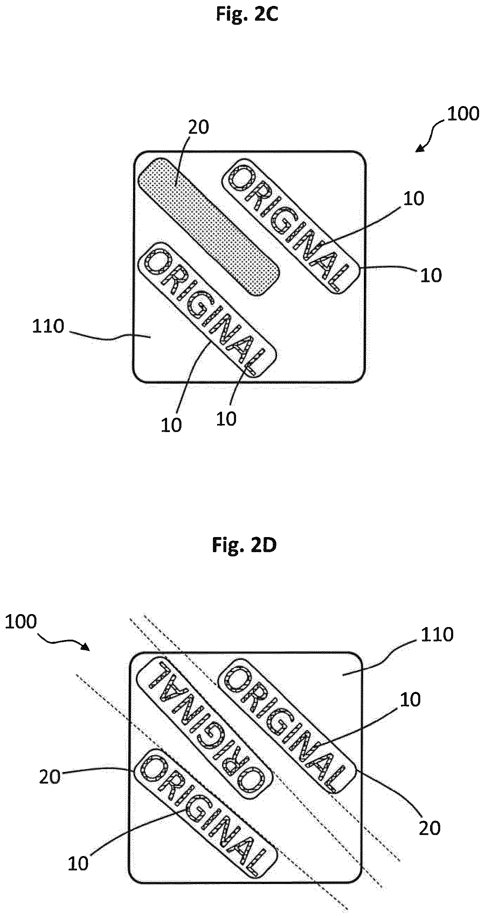

Figur 2C zeigt ein weiteres Ausführungsbeispiel der Etikettenanordnung 100, bei dem die dargestellten Schriftzüge und die sie umgebenden Rahmen mit der temperaturabhängigen Fluoreszenzfarbe 10 ausgebildet sind. Zwischen einer jeweiligen Reihe von Schriftzügen ist als Referenzfarbe eine begrenzte Fläche mit der temperaturunabhängigen Fluoreszenzfarbe 20 ausgestaltet.

In Figur 2D ist ein weiteres Ausführungsbeispiel der Etikettenanordnung 100 gezeigt, bei dem die beiden Fluoreszenzfarben 10, 20 mit einem vorgegebenen Streumuster auf der Etikettenschicht 110 aufgebracht sind. Ein solches Streumuster kann einen Beitrag zum Vermeiden von Auffälligkeiten leisten, dass zwei unterschiedliche Fluoreszenzfarben 10, 20 im Rahmen eines Druckverfahrens aufgebracht sind. Durch gezieltes, zufälliges Variieren der relativen Position der beiden Fluoreszenzfarben 10, 20 zueinander und/oder Einbringen einer Verkippung relativ zueinander wird ein Variationsbereich ausgebildet, welcher den Eindruck vermitteln kann, dass lediglich eine Farbe verwendet wurde. Diese gezielt eingebrachten Ungenauigkeiten entsprechen zum Beispiel einer typischen Streuung, die in der Regel im Rahmen eines Druckvorgangs vorliegt.

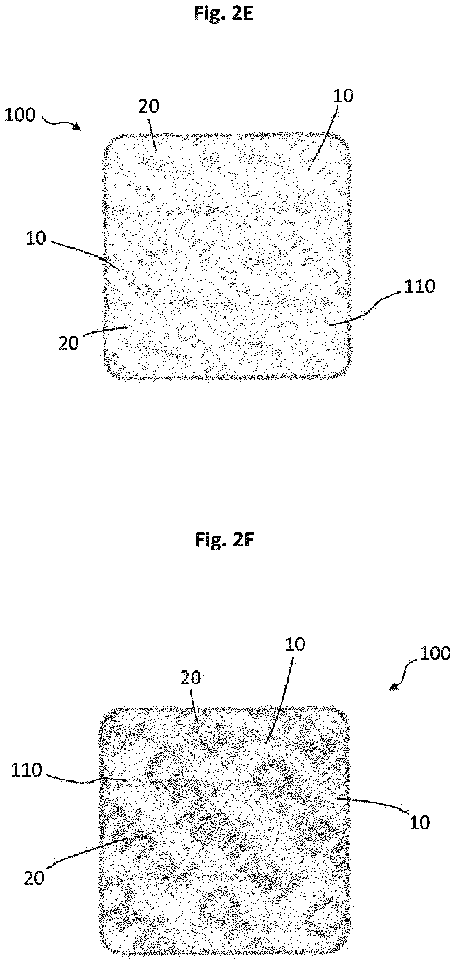

Figur 2E zeigt ein weiteres Ausführungsbeispiel der Etikettenanordnung 100, bei dem die dargestellten Schriftzüge mit der temperaturabhängigen Fluoreszenzfarbe 10 ausgebildet sind, während die temperaturunabhängige Fluoreszenzfarbe 20 in Form eines vorgegebenen Musters auf oder in der Etikettenschicht 110 ausgebildet ist und Zwischenräume zwischen den Schriftzügen ausfüllt. In Figur 2F ist das vorgegebene Muster nach Figur 2E mittels der temperaturabhängigen Fluoreszenzfarbe 10 ausgebildet und die Schriftzüge sind mittels temperaturunabhängiger Fluoreszenzfarbe 20, zum Beispiel über das Muster und die Fluoreszenzfarbe 10, aufgedruckt.

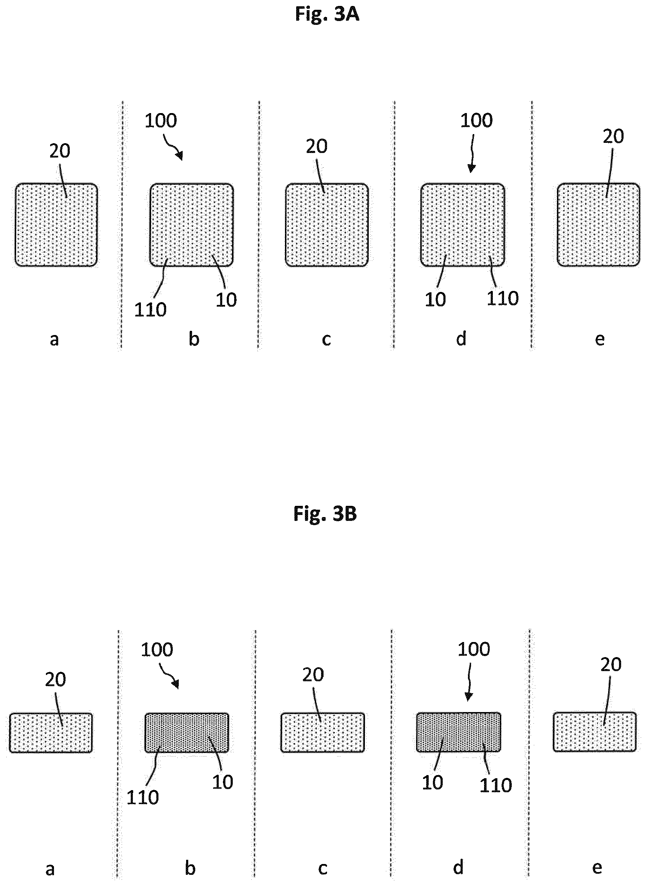

Figuren 3A bis 3B illustrieren eine Blickwinkelabhängigkeit der verwendeten Fluoreszenzfarben 10, 20, welche dahingehend genutzt werden kann, um ein Vorliegen des beschriebenen Sicherheitsmerkmals mit der temperaturabhängigen Fluoreszenzfarbe 10 weiter zu verifizieren. Die jeweiligen Farborte des temperaturabhängigen und des temperaturunabhängigen Fluoreszenzfarbstoffs 10, 20 weisen eine unterschiedliche Abhängigkeit von einem Blickwinkel auf, unter dem man die jeweiligen Flächen betrachtet. Werden die jeweiligen Fluoreszenzfarborte der beiden Fluoreszenzfarben 10, 20 zum Beispiel in Aufsicht (s. Figur 3A) aufeinander abgestimmt, dann zeigt sich in einer von der Aufsicht abweichenden Schrägsicht (s. Figur 3B) ein erkennbarer Unterschied hinsichtlich der Farbwirkung (illustriert als dichtere Punktstruktur).

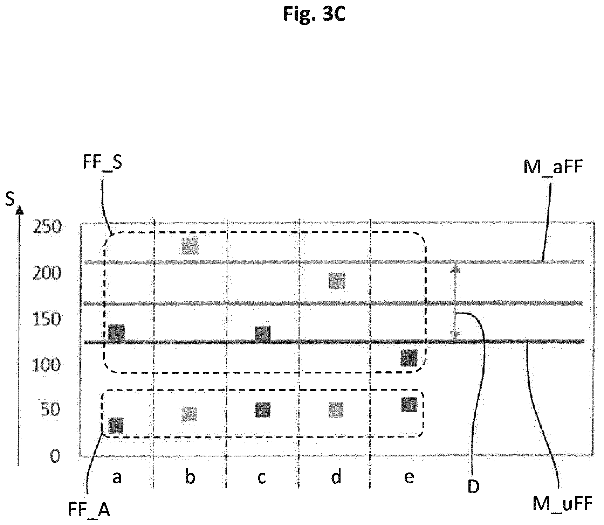

Figur 3C stellt eine solche blickwinkelabhängige Farbwirkung in einem Diagramm dar, in welchem eine Sättigung S als quantitative Maßzahl für die Farbwirkung für die in den Figuren 3A und 3B illustrierten Anordnungen a bis e eingetragen sind, welche abwechselnd die statische, temperaturunabhängige Fluoreszenzfarbe 20 und die variable, temperaturabhängige Fluoreszenzfarbe 10 aufweisen. Der dargestellte Farbparameter Sättigung S ist für die Aufsicht beziehungsweise Schrägsicht über 128 Pixel mal 128 Pixel beziehungsweise 64 Pixel mal 64 Pixel gemittelt. Anhand der Figur 3C ist zu erkennen, dass die Farbintensität beziehungsweise die Sättigung bezogen auf die Aufsicht FF_A keinen wesentlichen Unterschied der jeweiligen Fluoreszenzfarben 10, 20 zueinander zeigt, während in der Schrägsicht FF_S diesbezüglich deutliche Unterschiede zwischen den beiden Fluoreszenzfarben 10, 20 ablesbar sind. Bezogen auf eine gemittelte Sättigung M_aFF für temperaturabhängige Fluoreszenzfarben 10 und eine gemittelte Sättigung M_uFF für temperaturunabhängige Fluoreszenzfarben 20 kann dem Diagramm in Figur 3C ein Unterschied D von etwa 50 % der Sättigung entnommen werden.

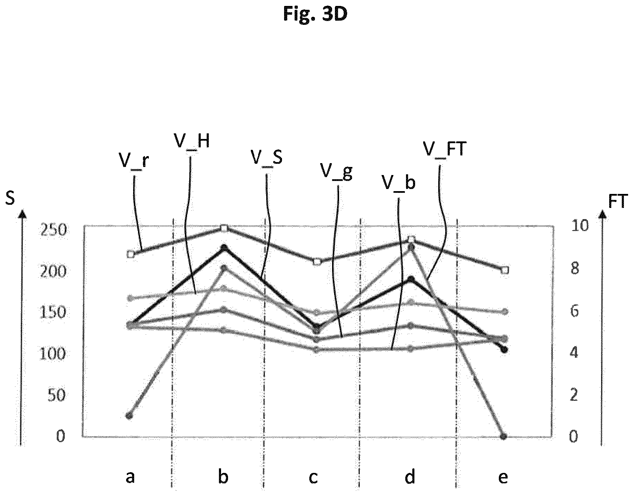

Figur 3D zeigt den Farbparameter Sättigung S für die in der Schrägsicht gemäß Figur 3B dargestellten Muster a bis e über 64 Pixel mal 64 Pixel gemittelt. Die einzelnen Verläufe zeigen: V_r entspricht dem Verlauf bezogen auf den roten Farbanteil der jeweiligen Fluoreszenzfarbe 10, 20; V_g entspricht dem Verlauf bezogen auf den grünen Farbanteil der jeweiligen Fluoreszenzfarbe 10, 20; V_b entspricht dem Verlauf bezogen auf den blauen Farbanteil der jeweiligen Fluoreszenzfarbe 10, 20; V_H entspricht dem Verlauf einer Helligkeit der jeweiligen Fluoreszenzfarbe 10, 20; V_S illustriert den Verlauf der Sättigung S der jeweiligen Fluoreszenzfarbe 10, 20; und V_FT zeigt den Verlauf eines Farbtons FT der jeweiligen Fluoreszenzfarbe 10, 20.

Die beschriebenen Ausführungsbeispiele ermöglichen mittels einer temperaturabhängigen Fluoreszenzfarbe 10 eine verborgene und zuverlässige Prüfung der Echtheit eines Gegenstands, welcher die Anordnung 1 oder die Etikettenanordnung 100 umfasst.

Das Sicherheitsmerkmal weist gemäß den Ausführungsbeispielen nach den Figuren 1C bis 2F zwei unterschiedliche Fluoreszenzfarben 10 und 20 auf, die zum Beispiel bei Zimmertemperaturen einen möglichst identischen Farbort haben. Nach einer Kältebehandlung, zum Beispiel mit Hilfe eines Kältesprays, ändert sich der Farbort der temperaturabhängigen Fluoreszenzfarbe 10 deutlich, sodass im Vergleich mit der temperaturunabhängigen Referenzfarbe 20 bei der Echtheitsprüfung für den Nutzer ein Unterschied in den zugehörigen Farborten besonders einfach erkennbar ist.

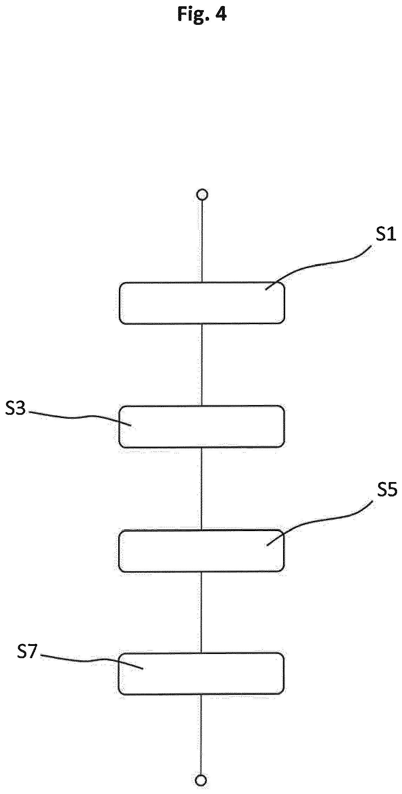

Figur 4 stellt ein Ausführungsbeispiel eines Ablaufdiagramms für ein Verfahren zum Herstellen der Etikettenanordnung 100 oder einer Materialbahn dar, welches ein Anfertigen und/oder Applizieren einer Vielzahl von Etikettenanordnungen 100 ermöglicht.

In einem Schritt S1 wird zum Beispiel ein Träger oder eine Materialbahn bereitgestellt, welche die Etikettenschicht 110 umfasst.

In einem weiteren Schritt S3 werden der temperaturabhängige und der temperaturunabhängige Fluoreszenzfarbstoff 10 und 20 bereitgestellt, indem zunächst die jeweiligen Farborte der beiden Fluoreszenzfarben 10, 20 unter ultraviolettem Licht bei Raumtemperatur miteinander abgeglichen werden.

In einem weiteren Schritt S5 werden die jeweiligen Farborte der beiden Fluoreszenzfarben 10, 20 auch unter Normallicht miteinander verglichen, und sofern keine tolerierbare Übereinstimmung vorliegt, werden die jeweiligen Farborte der beiden Fluoreszenzfarben 10, 20 iterativ aufeinander abgestimmt. Ein solches Abstimmen erfolgt zum Beispiel mittels Beimischen von Mischweiß zu der statischen Referenzfluoreszenzfarbe 20, sodass die beiden Fluoreszenzfarben 10, 20 bei Raumtemperatur unter Normallicht einen im Wesentlichen gleichen Weißgrad im sichtbaren Spektrum aufweisen. Das iterative Anpassen umfasst dabei eine Kontrolle der jeweiligen Farborte bei Raumtemperatur unter ultraviolettem Licht.

Sind die beiden Fluoreszenzfarben 10, 20 hinsichtlich ihrer jeweiligen Farborte aufeinander abgestimmt ausgebildet, können sie in einem weiteren Schritt S7 als druckfähige Substanz bereitgestellt und auf der Etikettenschicht 110 aufgedruckt werden. Zur Erhöhung der Fälschungssicherheit kann die Position und eine Verkippung der beiden Fluoreszenzfarben 10, 20 im Sicherheitsmerkmal gezielt variiert ausgebildet werden.

Durch die Einführung der zusätzlichen Fluoreszenzfarbe 20 als Referenzfarbe mit einem temperaturunabhängigen Farbort der Fluoreszenz und die Positionierung dieser Referenzfluoreszenzfarbe 20 in unmittelbarer räumlicher Nähe zu der temperaturabhängigen Fluoreszenzfarbe 10 wird ein besonders zuverlässiger Farbvergleich der beiden Fluoreszenzfarborte zueinander ermöglicht. Darüber hinaus bietet die temperaturunabhängige Fluoreszenzfarbe 20 den Vorteil, dass stets eine Referenzfarbe zum Vergleich mit dem temperaturveränderlicher Farbort der temperaturabhängigen Fluoreszenzfarbe verfügbar ist, sodass es beispielsweise für einen Farbortvergleich nicht wesentlich ist, an welchen Positionen die Etikettenanordnung 100 mit einem Kältespray beaufschlagt wird. Dies wirkt sich insbesondere vorteilhaft aus, wenn die mit der temperaturabhängigen Fluoreszenz bedruckte Fläche klein ist und mitunter die gesamte Fläche mit dem Kältespray gekühlt wird.

Es ist insbesondere von Vorteil, dass die beiden Fluoreszenzfarben hinsichtlich ihrer jeweiligen Farborte aufeinander abgestimmt sind, da auf diese Weise vermieden werden kann, dass eine Verwendung von zwei unterschiedlichen Fluoreszenzfarben auffällt. Dadurch, dass es nicht auffällt, dass zwei unterschiedliche Druck- beziehungsweise Fluoreszenzfarben vorliegen, würde das vorgegebene Druckmuster im Rahmen einer Kopie durch eine uneingeweihte Person nur durch eine einzige Druckfarbe nachgestellt, sodass eine erfindungsgemäße Prüfung der Echtheit des temperaturabhängigen Sicherheitsmerkmals nicht durchführbar und somit eine vorgenommene Manipulation umgehend auffällig wäre.

Gemäß den illustrierten Ausführungsbeispielen sind die verwendeten Farben als temperaturabhängige und temperaturunabhängige Fluoreszenzfarben 10, 20 beschrieben, aber es können alternativ auch Phosphoreszenzfarben oder verallgemeinert Lumineszenzfarben eingesetzt werden, welche die entsprechenden Eigenschaften aufweisen. Dabei kann die zur Lumineszenz zugeführte Energie in Form von Photonenstrahlung einen Aktivierungsprozesses einleiten und eine zeitnahe Fluoreszenz bewirken, welche zum Beispiel mittels einer handelsüblichen UV-Lampe anregbar ist. In Bezug auf Phosphoreszenz wird die einfallende Photonenstrahlung einen angeregten Zustand erzeugen, sodass die Photonenenergie für eine gewisse Zeit eingefroren oder gespeichert wird und nachfolgend von der Phosphoreszenzfarbe emittiert.

Ein Zuführen von Energie in Form von Photonenstrahlung zur Anregung der Fluoreszenz beziehungsweise der Lumineszenz kann zum Beispiel mittels Photonen im sichtbaren Spektralbereich oder einem zu diesem angrenzenden Wellenlängenbereich erfolgen. Darüber hinaus ist auch eine Anregung mittels Röntgenstrahlung und alternativer elektromagnetischer Strahlung denkbar, um entsprechende Lumineszenzfarben zur Lichtemission anzuregen.

Außerdem kann eine zum Anregen einer Lumineszenz zuzuführende Energie alternativ zur Beaufschlagung mit Photonenstrahlung oder zusätzlich auch durch andere Prozesse in einer geeigneten Entfernung bereitgestellt werden. Zum Beispiel kann der Anordnung 1 beziehungsweise der Etikettenanordnung 100 Energie durch chemische Reaktionen oder mittels mechanischer Einwirkung, zum Beispiel in Form von Reibungsenergie oder Auftreffen von Schallwellen, zugeführt werden, sofern die Lumineszenzfarben für eine solche Energiezufuhr eingerichtet sind. Alternativ oder zusätzlich kann Energie durch Auflösen von Kristallstrukturen in Wasser oder durch Einwirkung von auftreffenden Teilchen, wie zum Beispiel Alpha-Teilchen oder Elektronen, die einen Teil ihrer kinetischen Energie auf die Teilchen des oder der Fluoreszenzfarbstoffe 10, 20 übertragen, zugeführt werden.

Die Fluoreszenzfarben 10, 20 sind insbesondere mittels ultraviolettem Licht anregbar, aber alternativ können auch Fluoreszenz- oder Lumineszenzfarben verwendet werden, die in anderen Spektralbereichen anregbar sind und im sichtbaren Spektrum Licht emittieren. Zum Beispiel können die Lumineszenzfarben als sogenannte "Upconverter" ausgebildet sein, die mittels eines im nahen Infrarotbereich emittierenden Laserpointers angeregt werden können und im optisch sichtbaren Spektrum Licht abstrahlen.

Außerdem können Lumineszenzfarben verwendet werden, deren temperaturabhängiger Unterschied in Bezug auf die jeweiligen Farborte in anderen Wellenlängenbereichen als dem optisch sichtbaren Spektralbereich geprüft werden kann. Anstatt die Referenzfluoreszenzfarbe 20 mit der temperaturabhängigen Fluoreszenzfarbe 10 im sichtbaren Wellenlängenbereich zu vergleichen, können zum Beispiel Lumineszenzfarben verwendet werden, die im nahen Infrarotbereich von etwa 800-1000 nm Licht bzw. Strahlung emittieren. Zur Detektion ist dann eine entsprechende Sensorik, zum Beispiel in Form eines Infrarotsensors oder einer IR-Kamera, nutzbringend.

Darüber hinaus kann auch ein Abstimmen der jeweiligen Farborte des temperaturabhängigen und des temperaturunabhängigen Fluoreszenzfarbstoffs 10, 20 unter anderen Bedingungen durchgeführt werden. Anstatt bei Raumtemperatur unter UV-Beleuchtung den Farbort der Referenzfluoreszenzfarbe 20 an den ersten Farbort der temperaturabhängigen Fluoreszenzfarbe 10 anzupassen, können die jeweiligen Farborte bei kalten Temperaturen, beispielsweise entsprechend einer Beaufschlagung mit Kältespray, aneinander angepasst werden. Werden zum Beispiel für eine Anwendung bei Raumtemperatur zwei unterschiedliche Fluoreszenzfarborte benötigt, können die temperaturabhängige Fluoreszenzfarbe 10 und die temperaturunabhängige Referenzfluoreszenzfarbe 20 verwendet werden, um die zugehörigen Fluoreszenzfarborte darzustellen und eine Authentifizierung der Echtheit der Etikettenanordnung 100 über eine Übereinstimmung der jeweiligen Farborte bei kalten Temperaturen zu erzielen.

Um eine Sicherheit der Etikettenanordnung 100 weiter zu erhöhen, kann neben der eingeführten Referenzfluoreszenzfarbe 20, deren Farbort zum Beispiel bei Raumtemperatur identisch oder zumindest innerhalb eines Toleranzbereichs übereinstimmend mit dem ersten Farbort der temperaturabhängigen Fluoreszenzfarbe 10 ist, eine weitere, zweite temperaturunabhängige Referenzfarbe eingeführt werden, deren Farbort dann bei kalten bzw. tiefen Temperaturen identisch oder zumindest innerhalb eines Toleranzbereichs übereinstimmend mit dem zweiten Farbort der temperaturabhängigen Fluoreszenzfarbe 10 ist.

Außerdem können Lumineszenzfarben gemäß der beschriebenen Anordnung 1 oder der beschriebenen Etikettenanordnung 100 Verwendung finden, bei denen ein Unterschied zwischen zugehörigen Farborten nicht zwingend durch eine Änderung der Temperatur, sondern allgemein durch einen physikalischen oder chemischen Wirkmechanismus auslösbar ist. Zum Beispiel können Fluoreszenz- beziehungsweise Lumineszenzfarbstoffe eingesetzt werden, bei denen eine Zustandsänderung und ein Wechseln des Farbortes durch Benetzung mit Wasser oder Chemikalien, durch Anströmung mit Kohlenstoffdioxid-haltiger (Atem-)Luft oder anderen Gasen, durch Variation des Luftdrucks oder einer anderen Krafteinwirkung auslösbar ist, die zum Beispiel durch Änderung von Gitterkonstanten zu einer Farbveränderung führen kann.

Die temperaturabhängige Fluoeszenzfarbe 10 kann zum Beispiel direkt, wie in den Figuren 1A und 1B dargestellt, in eine Faser 3 oder ein Thermoplast 5 integriert sein. Die temperaturabhängige Fluoeszenzfarbe 10 ist beispielsweise bei einer Herstellung des Endprodukts, welches gemäß den illustrierten Ausführungsbeispielen nach den Figuren 1A und 1B als Faser 3 oder Thermoplast 5 realisiert ist, einem zugehörigen Rohmaterial beigegeben, sodass das für die Prüfung der Echtheit verwendete Fälschungsschutzmerkmal in dem gefertigten Endproukt enthalten ist. Weiter mögliche Endprodukte mit einem temperaturabhängigen Sicherheitsmerkmal können realisiert sein als Kompositwerkstoff, Duroplast, als Elastomer, als Papierelement (s. Figur 1C) oder ein Folienelement.

Dabei ist es besonders vorteilhalt, dass das jeweils verwendete Material in dem Wellenlängenbereich transparent ausgebildet ist, in dem sich eine farbliche Änderung der temperaturabhängigen Fluoreszenzfarbe 10 ausbildet, da dann die durch die temperaturabhängige Fluoreszenzfarbe 10 begründete Farbänderung besonders deutlich erkennbar ist.

Alternativ kann die temperaturabhängige Fluoeszenzfarbe 10 in einen Merkmal-Träger eingearbeitet werden, welcher in Folge auf diverse Oberflächen oder in diverse Materialien oder Gegenstände auf- beziehungsweise eingebracht werden kann. Ein solcher Träger kann beispielsweise eine sprühfähige Flüssigkeit, ein Klebstoff, ein Lack, eine Farbe, eine Faser, ein Aeorsol oder ein Kompositwerkstoff sein. Verfahren zum Aufbringen können zum Beispiel Drucken, Sprühen, Eintauchen oder Prägen sein. Ein Herstellen eines solchen Sicherheitsmerkmals in oder an einer Etikettenanordnung 100 kann gemäß dem Ablaufdiagramm nach Figur 4 durchgeführt werden.

Insbesondere in Kombination mit der temperaturunabhängigen Referenzfluoreszenzfarbe 20 ermöglicht die temperaturabhängige Fluoreszenzfarbe 10 eine zuverlässige und sichere Prüfung der Echtheit eines Gegenstands und trägt zu einem erhöhten Sicherheitsniveau des Gegenstands bei. Das beschriebene Sicherheitsmerkmal der Fluoreszenz kann mittels einer handelsüblichen UV-Lampe bei etwa 365 nm auf einfache und kostengünstige Weise ausgelesen beziehungsweise überprüft werden. Eine solche UV-Lampe wird unter anderem bei der Banknotenprüfung eingesetzt und verbreitet und ist daher auch als Detektor für die Prüfung des beschriebenen Sicherheitsmerkmals verfügbar. Diese Verfügbarkeit und die entsprechende Routine im Umgang mit solchen Vorrichtungen wirken sich zusätzlich nutzbringend auf Ausgestaltungen des beschriebenen Sicherheitsmerkmals aus.

Zusätzlich zu der Überprüfung der Echtheit des Sicherheitsmerkmals unter Zuhilfenahme einer UV-Lampe kommt eine weitere, temperaturabhängige Stufe der Verifizierung mittels eines handelsüblichen Kältesprays. Somit wird es einem Prüfer ermöglicht, eine Änderung des Farbortes der temperaturabhängigen Fluoreszenzfarbe 10 möglichst zweifelsfrei feststellen zu können. Auch kleinere Temperaturveränderungen im Übergangsbereich können durch den Kontrast zur statischen Fluoreszenzfarbe 20 deutlich sichtbar gemacht werden. Ein Ziel einer solchen Prüfung ist es, eine Indikation über die Echtheit des Gegentstands zu erhalten, auf dem die Fluoreszenzfarben 10, 20 aufgebracht oder in dem die Fluoreszenzfarben 10, 20 eingebracht sind.

Zum Beispiel können die Fluoreszenzfarben 10, 20 direkt auf einen Gegenstand aufgedruckt werden, um dessen Echtheit zu markieren, zum Beispiel ein Papierelement (s. Figur 1C), eine Folienelement, ein Kartonelement, ein Stoffelement, ein Glaselement, ein Lederelement, ein Holzelement, ein Keramikelement, ein Metallelement, eine Folienverpackung, einen Blister, eine Faltschachtel, eine Kunststoffflasche, eine Banknote (s. Figur 1C), eine Uhr, ein Werkzeug oder ein anderes Gerät. Insbesondere können die Fluoreszenzfarben 10, 20 auf ein Etikett aufgedruckt werden oder in einer Etikettenanordnung 100, zum Beispiel gemäß den illustrierten Figuren 2A bis 2F, verarbeitet werden, sodass ein Gegenstand ausgezeichnet werden kann, um dessen Echtheit zu markieren.

Außerdem können mehrere Referenzfluoreszenzfarben, wie die temperaturunabhängige Fluoreszenzfarbe 20, eingesetzt werden, für die ein jeweiliger Farbort zum Beispiel in Abstimmung auf den variablen Farbort des temperaturabhängigen Fluoreszenzfarbstoffs 10 in Temperaturschritten von 10°C vorgegeben ausgebildet. Auf diese Weise bilden die Referenzfluoreszenzfarben eine Referenzskala, die zum Beispiel zusätzlich mitgedruckt ist, sodass der Prüfer anhand der passenden Referenzfarbe einen aktuellen Temperaturbereich ermitteln kann, bei welchem das Sicherheitsmerkmal überprüft wird.

Darüber hinaus können die Fluoreszenzfarben 10, 20 auf Produkte aufgebracht werden, die unter -25 °C gelagert werden müssen. Eine Verifizierung der Echtheit und Dokumentation des Befundes, wie zum Beispiel eine Farbe oder ein Motiv, dient dann gleichzeitig der Dokumentation, ob das Produkt im gekühlten Zustand oder bei Raumtemperatur getestet wurde.

Die Etikettenanordnung 100 kann einschichtig ausgebildet sein und zum Beispiel die Etikettenschicht 110 als folienbasiertes Sicherheitsmerkmal aufweisen. Alternativ ist die Etikettenanordnung 100 mehrschichtig aufgebaut und weist zum Beispiel zusätzliche Lagen zum Beschriften oder zum Ausbilden weiterer Sicherheitsmerkmale auf. Außerdem kann die Etikettenanordnung 100 an einer Unterseite einen Klebstoff aufweisen, welcher zum Beispiel im Rahmen des Herstellungsverfahrens aufgebracht und für eine spätere Verwendung mit Silikonpapier bedeckt wird.

Darüber hinaus kann die hergestellte Etikettenanordnung 100 in einem weiteren Schritt des Verfahrens oder in einem separaten Verfahren an einem Gegenstand appliziert werden. Auf diese Weise ist zum Beispiel auch eine maschinelle Applikation der Etikettenanordnung 100 möglich, sodass ein zuverlässiges und sicheres Anbringen einer jeweiligen Etikettenanordnung 100 an einer Vielzahl von Gegenständen möglich ist.

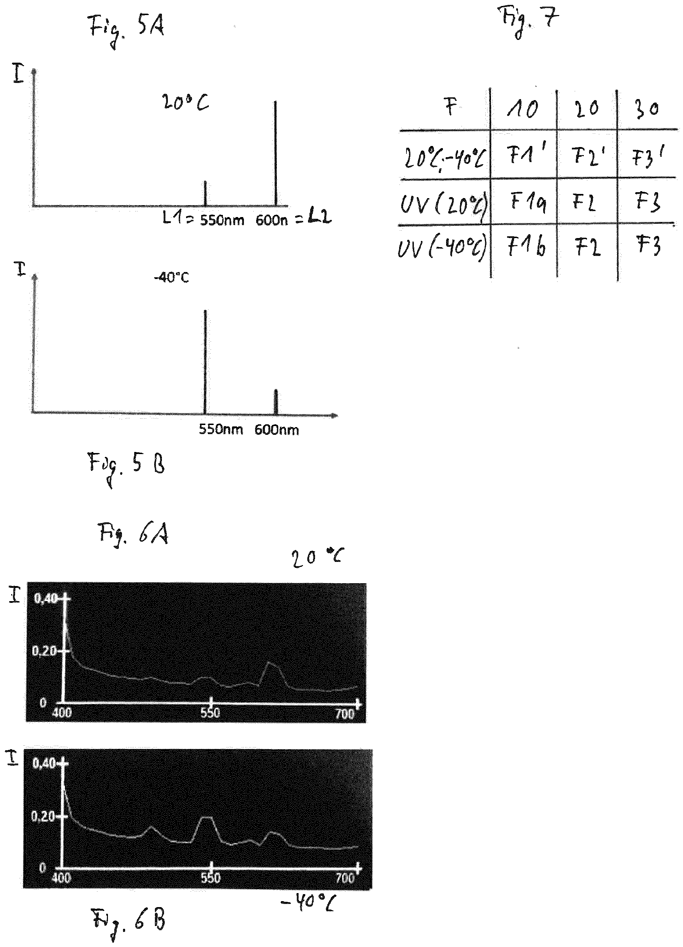

Bei allen oben genannten oder nachstehend beanspruchten Ausführungsbeispielen kann wahlweise ein erster, temperaturabhängig lumineszierender Lumineszenzfarbstoff 10, vorzugsweise zusätzlich noch ein zweiter Lumineszenzfarbstoff 20, dessen Lumineszenz nicht temperaturabhängig ist, und optional noch ein dritter Lumineszenzfarbstoff 30, dessen Lumineszenz ebenfalls nicht temperaturabhängig ist, vorgesehen sein. Bei Tageslicht hat der erste Lumineszenzfarbstoff ein Aussehen, insbesondere eine Farbe, die einem ersten Farbort F1' entspricht. Die Farborte des zweiten und dritten Lumineszenzfarbstoffs 20 bzw. 30 bei Tageslicht sind F2' bzw. F3' (vgl. Figur 7). Diese Farborte F1', F2' und F3' (bei Tageslicht; d.h. ohne Einwirkung von UV-Strahlung) sind temperaturunabhängig.

Die Farborte des zweiten bzw. dritten Lumineszenzfarbstoffs 20 bzw. 30 unter Einwirkung von UV-Strahlung (anstelle von Tageslicht), d.h. die Farborte des Emissionsspektrums des betreffenden Lumineszenzfarbstoffs 20 bzw. 30, sind davon in der Regel verschieden; sie heißen hier F2 bzw. F3 und hängen nicht von der Temperatur ab. Der erste Lumineszenzfarbstoff 10 hingegen hat unter UV-Bestrahlung ein Emissionsspektrum, dessen Farbort mit der Temperatur variiert; der Farbort seines Emissionsspektrums bei einer ersten Temperatur Fla (beispielsweise bei Raumtemperatur) ist von demjenigen F1b bei einer anderen, zweiten Temperatur (beispielsweise 0°C, -20°C oder -40°C) verschieden; bei Temperaturänderung dazwischen variiert der Farbort dazwischen kontinuierlich (d.h. stetig und nicht sprunghaft).

Ein emittiertes Lumineszenz-, d.h. Phosphoreszenz- oder Fluoreszenzspektrum kann sich aus scharfen Peaks bei bestimmten Wellenlängen und/oder aus kontinuierlichen Wellenlängenbereichen, über die hinweg eine deutliche Intensität nachweisbar ist, zusammensetzen. Einem Lumineszenzspektrum lässt sich ein Farbort zuordnen, der dem vom menschlichen Auge wahrgenommenen Farbeindruck des emittierten Spektrums entspricht. Solch ein Farbeindruck kann mit bloßem Auge oder messtechnisch (z.B. mit einem Detektor, der die Wahrnehmung des menschlichen Auges imitiert) erfasst werden. In beiden Fällen lässt sich ein Farbeindruck beobachten oder messtechnisch ermitteln, den das emittierte Spektrum für das menschliche Auge erzeugt. Dieser Farbeindruck entspricht einem Farbort, der zumindest den Farbton, vorzugsweise auch noch die Farbsättigung und/oder die Helligkeit umfasst. Der Farbort kann mit jedem gängigen Normensystem zur Normierung von Farben erfasst und ausgedrückt werden. Dem Farbton kann wiederum eine bestimmte (mittlere) Wellenlänge zugeordnet werden, die diejenige Farbe wiedergibt, den das menschliche Auge als Farbe der Lumineszenzstrahlung wahrnimmt. Selbst wenn ein Lumineszenzstoff bei genau dieser Wellenlänge keinerlei Strahlung emittiert, ist eine solche (mittlere) Wellenlänge ermittelbar, da das menschliche Auge die Strahlungsintensitäten (mit entsprechender Gewichtung gemäß der Empfindlichkeit der Zäpfchen für das Farbensehen) über den sichtbaren Wellenlängenbereich integriert. Beispielsweise kann das Emissionsspektrum Peaks bei zwei Wellenlängen aufweisen, während der Farbeindruck einer dritten Wellenlänge entspricht, die zwischen diesen Wellenlängen liegt, obwohl keine Strahlung genau dieser dritten Wellenlänge emittiert wurde.

Wie in den Figuren 5A und 5B schematisch dargestellt ist vorzugsweise vorgesehen, dass als erster Lumineszenzfarbstoff 10 ein solcher verwendet wird, der in seinem emittierten Spektrum zumindest zwei Peaks bei bestimmten Wellenlängen L1 und L2 aufweist; insbesondere ein solcher Lumineszenzstoff, bei dem die emittierte Intensität I bei L1 und diejenige bei L2 gegenläufig von der Temperatur abhängen. Dies bedeutet, dass mit sich ändernder Temperatur von T1 nach T2 (beispielsweise bei Temperaturabnahme bzw. von T1 nach T2 fallender Temperatur) die Intensität der Lumineszenzstrahlung bei L1 abnimmt, während gleichzeitig die Intensität der Lumineszenzstrahlung bei L2 zunimmt. Mit einem solchen Lumineszenzstoff, dessen unter UV-Bestrahlung emittiertes Spektrum eine solche gegenläufige, temperaturabhängige Veränderung der Strahlungsintensität zweier Spektrallinien bzw. Wellenlängen L1, L2 zeigt, ist eine besonders ausgeprägte und deutlich wahrnehmbare Farbveränderung des Farborts (bzw. der diesem Farbort zugeordneten mittleren Wellenlänge) des Lumineszenzspektrums realisierbar, was insbesondere zur Ausbildung eines mit bloßem Auge schnell und einfach überprüfbaren Sicherheitsmerkmals ausnutzbar ist. So kann durch UV-Bestrahlung und Besprühen mit einem Kältespray überprüft werden, ob die wahrgenommene Lumineszenzfarbe Fla eines ersten Lumineszenzstoffs 10 bei Kühlung auf eine (z.B. mindestens um 20, 40 oder 60 Grad) kältere Temperatur (insbesondere im Vergleich zur Raumtemperatur von 21°C) gleichbleibt oder aber sich verändert, insbesondere zu einem deutlich abweichenden Farbort F1b verschiebt, dessen zugeordnete Wellenlänge um z.B. mehr als 15 oder 30 nm (je nach Ausführungsform bis über 45 nm) von der Wellenlänge des bei Raumtemperatur (des Lumineszenzstoffs 10) wahrgenommenen Farborts seines Lumineszenzspektrums abweicht. Sogar der kontinuierliche Übergang zwischen beiden wahrgenommenen mittleren bzw. korrespondierenden Wellenlängen ist wahrnehmbar, etwa wenn nach Besprühen mit einem Kältespray der Lumineszenzstoff 10 sich allmählich wieder der Raumtemperatur nähert.

Die Figuren 6A und 6B zeigen ein gemessenes Lumineszenzspektrum eines temperaturabhängigen Fluoreszenzstoffs 10, dessen emittiertes Spektrum unter anderen zwei lokale Maxima bei zwei speziellen Wellenlängen L1= 550 nm und L2 = 625 nm aufweist, die schon in den Figuren 5A und 5B schematisch vereinfacht dargestellt wurden. Bei Raumtemperatur überwiegt die Intensität bei 625 nm gegenüber derjenigen bei 550 nm; dem menschlichen Auge erscheint unter UV-Licht bei Raumtemperatur der Lumineszenzstoff in der Farbe Orangerot. Bei Temperaturabsenkung auf -40°C hingegen steigt die emittierte Intensität bei L1= 550 nm deutlich an, wohingegen diejenige bei L2 = 625 nm stark verringert ist; insbesondere das relative Verhältnis beider Intensitäten kehrt sich über die Temperaturdifferenz deutlich wahrnehmbar um; bei -40°C erscheint der Lumineszenzstoff nun in der Farbe Grün. Im Temperaturintervall dazwischen erfolgt die Veränderung beider Intensitäten kontinuierlich, d.h. ohne sprunghafte Änderungen um bestimmte Temperaturen herum. Somit beträgt die Verschiebung der vom menschlichen Auge empfundenen Lumineszenzfarbe bzw. mittleren Wellenlänge beispielsweise weniger als 5 nm pro Temperaturänderung um fünf Grad Celsius; unabhängig davon, ausgehend von welcher Temperatur diese Temperaturänderung stattfindet. Die Intensitäten I in den Figuren 5A bis 6B sind im Übrigen in beliebigen relativen Einheiten aufgetragen.

Zur deutlicheren Farbkontrolle der Farbe des ersten Lumineszenzstoffs kann ein zweiter und ggfs. auch ein dritter Lumineszenzstoff 20 bzw. 30 vorgesehen sein, deren Lumineszenzspektren nicht von der Temperatur abhängen und die als Referenzfarbflächen für die bei den Temperaturen T1 und T2 beobachteten Farborte F1a und F1b des ersten Lumineszenzstoffs dienen.

Als Material für den Lumineszenzstoff 10 der Figuren 5A bis 6B, bei dem der Farbort seines unter UV-Bestrahlung emittierten Spektrums sich bei einer Temperaturveränderung möglichst deutlich verschieben soll (insbesondere durch gegenläufige Intensitätsänderung der Strahlungsintensitäten bei zwei Spektrallinien mit der Temperaturänderung), können beispielsweise Oxinate oder Substanzen bzw. Zusammensetzungen mit metallorganischen Komplexen verwendet werden. Auswahl und Mischungsverhältnis der Substanzen sind dabei anhand der gemessenen Lumineszenzspektren optimierbar; oft sind noch deutlich stärkere Verschiebungen des Farborts der Lumineszenzspekten (in Abhängigkeit von der Temperatur) beobachtbar, z.B. Veränderungen des Farborts, bei denen eine Verschiebung der mittleren (d.h. vom menschlichen Auge insgesamt empfundenen) Wellenlänge um 45 nm oder sogar 50 nm beobachtbar sind und/oder Verschiebungen des Farborts, die über noch größere Temperaturintervalle von bis über 50 oder 60 Grad Temperaturänderung beobachtbar sind; letztere können z.B. 0,5 bis 1,2 nm pro einem Grad Temperaturänderung über das gesamte Temperaturintervall betragen. Mit Oxinaten lassen sich beispielsweise über Temperaturdifferenzen zwischen 21°C und -40°C Farbverschiebungen zwischen Orange (bzw. Orangerot) und Grün realisieren; selbst die bei Temperaturänderungen um lediglich 20 Grad viel geringeren Farbverschiebungen sind vom menschlichen Auge noch so deutlich erkennbar (ggfs. mit einer oder mehreren Vergleichsfarbflächen 20, 30 aus Lumineszenzstoffen mit temperaturunabhängigem Lumineszenzspektrum), sodass jede Person schon nach kurzer technischer Einweisung rasch und eindeutig ermitteln kann, ob die herstellerseitig verwendeten, echten Prüffarbstoffe vorliegen oder eine gefälschte Kopie vorliegt, deren Farbstoffe entweder gar nicht lumineszieren oder bei denen der erste Lumineszenzfarbstoff 10 jedenfalls bei Temperaturänderung, insbesondere Kühlung nicht die vorhergesagte Farbveränderung seiner Lumineszenzfarbe zeigt.

Eine Verwendung der oben genannten Materialien und Zusammensetzungen, die eine derart deutlich wahrnehmbare Farbverschiebung des Lumineszenzspektrums zeigen, dass sie durch das menschliche Auge sogar ohne optische Nachweisgeräte erkennbar ist, und deren Verwendung für ein Sicherheitsmerkmal eines Etiketts oder eines sonstigen Gegenstands sind bislang nicht bekannt. Somit kann die Echtheit bzw. Authentizität z.B. eines Etiketts oder eines etikettierten Gegenstands oder Behälters künftig allein mittels eines Kältesprays und einer handelsüblichen UV-Strahlungsquelle überprüft werden; etwaige herkömmlich erforderliche Messgeräte zur Erfassung der spektralen Verteilung des Lumineszenzspektrums (und dessen temperaturabhängiger Veränderung) können künftig entfallen. Erfindungsgemäß werden solche Lumineszenzstoffe verwendet, die unmagnetisch, d.h. nicht magnetisierbar sind und bei denen bereits die unmittelbare Temperaturänderung eine Verschiebung des Farborts ihrer Lumineszenzstrahlung bewirkt, ohne dass magnetische Effekte involviert sind.

Figur 7 zeigt abschließend tabellarisch die verwendeten Bezeichnungen bzw. Abkürzungen für die Farborte der jeweiligen Lumineszenzstoffe 10, 20 und 30. In der zweiten Zeile stehen die temperaturunabhängig geltenden Farborte bei Tageslicht, d.h. ohne Einwirkung von UV-Strahlung. In der vorletzten Zeile stehen diejenigen für UV-Beleuchtung bei Raumtemperatur und in der letzten Zeile diejenigen für UV-Beleuchtung bei -40°C. Die Lumineszenzstoffe 10, 20 lassen sich iterativ so optimieren, dass nicht nur bei Tageslicht ihre Farben bzw. Farborte F1' und F2' vom menschlichen Auge nicht unterscheidbar sind, sondern auch die Farborte ihrer Lumineszenzfarben Fla und F2 bei Raumtemperatur. Erst bei Kühlung (auch schon um weitaus geringere Temperaturintervalle; z.B. nur bis auf 0°C) ist nachprüfbar, ob eine farbliche Differenz zwischen den Farborten F1b (statt vorher F1a) und der identisch gebliebenen Referenzfarbe F2 auftritt; die Farbe F1b ist von der vorherigen F1a des ersten Lumineszenzstoffs 10 deutlich verschieden, wohingegen der Lumineszenzstoff 20 temperaturunabhängig, d.h. wiederum gemäß demselben Farbort F2 luminesziert. Sofern noch ein dritter Lumineszenzstoff 30 eingesetzt wird, wird sein Farbort F3 vorzugsweise an denjenigen F1b des ersten Lumineszenzstoffs 10 bei einer zweiten, tieferen Temperatur (z.B. 0°C, -20 °C oder -40 °C) angepasst und wahlweise zusätzlich sein Farbort F3' bei Tageslicht an denjenigen F1' des ersten Lumineszenzstoffs 10 bei Tageslicht.

### Bezugszeichenliste

- 1: Anordnung
- 3: Faser
- 5: Thermoplast
- 7: Papierelement
- 10: erster Lumineszenzfarbstoff
- 20: zweiter Lumineszenzfarbstoff
- 30: dritter Lumineszenzfarbstoff
- 100: Etikettenanordnung
- 110: Etikettenschicht
- a-e: verschiedene Muster mit einer jeweiligen Fluoreszenzfarbe
- D: Unterschied der Sättigung der Fluoreszenzfarben
- F, F1, F1a, F1b, F1', F2, F2', F3, F3': Farbort
- FF_A: Fluoreszenzfarben in Aufsicht
- FF_S: Fluoreszenzfarben in Schrägsicht
- FT: Farbton
- M_aFF: Mittel der Sättigung für temperaturabhängige Fluoreszenzfarben
- M_uFF: Mittel der Sättigung für temperaturunabhängige Fluoreszenzfarben
- I: Intensität
- S: Sättigung der Fluoreszenzfarben
- S(i): verschiedene Schritte eines Verfahrens zum Herstellen einer Etikettenanordnung für ein Sicherheitsetikett
- UV: UV-Beleuchtung
- V_(i): verschiedene Verläufe für einen roten, einen grünen, einen blauen Farbanteil der Fluoreszenzfarben sowie für die Sättigung, die Helligkeit und den Farbton der Fluoreszenzfarben

## Patentansprüche

1. Anordnung (1), umfassend:
- eine Komponente (3, 5, 7, 110), und
- einen unmagnetischen, temperaturabhängigen ersten Lumineszenzfarbstoff (10), welcher in einem ersten Zustand einen vorgegebenen ersten Farbort (F1a) und in einem zweiten Zustand einen von dem ersten Farbort unterschiedlichen, vorgegebenen zweiten Farbort (F1b) aufweist und welcher derart an der Komponente (3, 5, 7, 110) angeordnet oder in die Komponente (3, 5, 7, 110) integriert ist, dass der unmagnetische, temperaturabhängige erste Lumineszenzfarbstoff (10) in Abhängigkeit von einer auf ihn einwirkenden Temperaturänderung eine optisch erkennbare Farbänderung von dem ersten Farbort (F1a) hin zum zweiten Farbort (F1b) ausbildet.

2. Anordnung (1) nach Anspruch 1, wobei der unmagnetische, temperaturabhängige erste Lumineszenzfarbstoff (10) ein Lumineszenzspektrum besitzt, das von der Temperatur abhängt, wobei das Lumineszenzspektrum, dessen Farbort und/oder dessen mittlere Wellenlänge bei einer ersten Temperatur (T1) dem ersten Farbort (F1a) entspricht und bei einer unterschiedlichen, zweiten Temperatur (T2) dem zweiten Farbort (F1b) entspricht.

3. Anordnung (1) nach Anspruch 1 oder 2, wobei das Lumineszenzspektrum des unmagnetischen, temperaturabhängigen ersten Lumineszenzfarbstoffs (10) und/oder dessen Farbort bei Durchlaufen eines Temperaturintervalls, das von der ersten Temperatur (T1) bis zur zweiten Temperatur (T2) reicht, einen kontinuierlichen, stetigen und reversiblen Übergang zwischen dem bei der ersten Temperatur (T1) erreichten ersten Farbort (F1a) und dem bei der zweiten Temperatur (T2) erreichten zweiten Farbort (F1b) durchläuft, wobei die erste (T1) und die zweite Temperatur (T2) höchstens so hoch sind wie die Raumtemperatur und um mindestens 20 Grad Celsius, vorzugsweise um mindestens 40 Grad Celsius auseinanderliegen.

4. Anordnung (1) nach einem der Ansprüche 1 bis 3, wobei das Lumineszenzspektrum und/oder dessen mittlere Wellenlänge zumindest innerhalb eines unterhalb der Raumtemperatur von 21°C liegenden Temperaturintervalls durch Temperaturänderung kontinuierlich, stetig und reversibel um insgesamt mindestens 15 nm, vorzugsweise um insgesamt mindestens 30 nm veränderbar ist.

5. Anordnung (1) nach einem der Ansprüche 1 bis 4, wobei das Lumineszenzspektrum und/oder dessen mittlere Wellenlänge zumindest innerhalb eines unterhalb der Raumtemperatur liegenden Temperaturintervalls, das mindestens 15 Grad Celsius Temperaturdifferenz, vorzugsweise mindestens 30 Grad Celsius Temperaturdifferenz umfasst, kontinuierlich, stetig und reversibel um mindestens 0,5 nm pro einem Grad Celsius Temperaturänderung variierbar ist.

6. Anordnung (1) nach einem der Ansprüche 1 bis 5, umfassend:
einen temperaturunabhängigen, zweiten Lumineszenzfarbstoff (20), welcher einen vorgegebenen Farbort (F2) aufweist, der auf den ersten (F1a) oder zweiten Farbort (F1b) des temperaturabhängigen, ersten Lumineszenzfarbstoffs (10) abgestimmt ist und eine Referenzfarbe zu dem ersten (F1a) oder zweiten Farbort (F1b) ausbildet und welcher angrenzend zu dem temperaturabhängigen, ersten Lumineszenzfarbstoff (10) an der Komponente (3, 5, 7, 110) angeordnet oder in die Komponente (3, 5, 7, 110) integriert, insbesondere angrenzend an den temperaturabhängigen, ersten Lumineszenzfarbstoff (10) in die Komponente (3, 5, 7, 110) integriert ist.

7. Anordnung (1) nach Anspruch 6, wobei die jeweiligen Farborte der Lumineszenzspektren des temperaturabhängigen, ersten Lumineszenzfarbstoffs (10) und des temperaturunabhängigen, zweiten Lumineszenzfarbstoffs (20) in Abhängigkeit eines vorgegebenen Blickwinkels aufeinander abgestimmt sind.

8. Anordnung (1) nach einem der Ansprüche 1 bis 7, wobei die Komponente (3, 5, 7, 110) in einem spektralen Bereich, der vom ersten Farbort (F1a) des ersten Lumineszenzfarbstoffs (10) bis einschließlich zum zweiten Farbort (F1b) des ersten Lumineszenzfarbstoffs (10) reicht, optisch transparent ausgebildet ist.

9. Anordnung (1; 100) nach einem der Ansprüche 6 bis 8, wobei der temperaturabhängige erste Lumineszenzfarbstoff (10) und der temperaturunabhängige zweite Lumineszenzfarbstoff (20) so aufeinander abgestimmt sind, dass sie für das menschliche Auge bei Tageslicht farblich übereinstimmen und dass die Farborte (F1a; F2) und/oder die mittleren Wellenlängen ihrer Lumineszenzsprektren unter UV-Einstrahlung bei Raumtemperatur bis auf maximal 5 nm miteinander übereinstimmen, wohingegen die Farborte (F1b; F2) und/oder mittleren Wellenlängen ihrer Lumineszenzsprektren unter UV-Einstrahlung bei einer Temperatur, die mindestens 20°C unterhalb, vorzugsweise mindestens 30°C unterhalb der Raumtemperatur liegt, voneinander abweichen.

10. Anordnung (1) nach einem der Ansprüche 1 bis 9, wobei die Komponente (3, 5, 7, 110) zumindest als ein Teil einer Etikettenanordnung (100), insbesondere als Etikett oder Etikettenschicht (110), oder als Teil einer Faser (3), eines Thermoplasts (5) oder eines Papierelements (7) ausgebildet ist.

11. Anordnung (1) nach einem der Ansprüche 1 bis 10, wobei die Anordnung eine Etikettenanordnung (100) für ein Sicherheitsetikett ist,
wobei die Komponente (3, 5, 7, 110) als eine Etikettenschicht (110) ausgebildet ist und in oder an der Etikettenschicht (110), insbesondere auf einer Oberfläche der Etikettenschicht (110) der erste, temperaturabhängige Lumineszenzfarbstoff (10) und daran angrenzend der zweite, temperaturunabhängige Lumineszenzfarbstoff (20) angeordnet, beispielsweise als Streumuster einer vorgegebenen Geometrie aufgedruckt oder aufgesprüht sind.

12. Anordnung (100) nach einem der Ansprüche 9 bis 11, umfassend:
einen temperaturunabhängigen, dritten Lumineszenzfarbstoff (30), welcher angrenzend an den temperaturabhängigen, ersten Lumineszenzfarbstoff (10) an der Etikettenschicht (110) angeordnet oder in die Etikettenschicht (110) integriert ist, wobei der temperaturunabhängige, zweite Lumineszenzfarbstoff (20) einen vorgegebenen Farbort (F2) aufweist, der auf den einen, insbesondere ersten (F1a) der beiden Farborte des temperaturabhängigen, ersten Lumineszenzfarbstoffs (10) abgestimmt, insbesondere daran angeglichen ist und/oder eine Referenzfarbe zu diesem einen, insbesondere ersten Farbort (F1a) bildet, wohingegen der dritte, ebenfalls temperaturunabhängige Lumineszenzfarbstoff (30) unter UV-Einstrahlung einen vorgegebenen Farbort (F3) aufweist, der auf den anderen, insbesondere zweiten (F1b) der beiden Farborte des temperaturabhängigen, ersten Lumineszenzfarbstoffs (10) abgestimmt, insbesondere daran angeglichen ist und/oder eine Referenzfarbe zu diesem anderen, insbesondere zweiten Farbort (F1b) bildet.

13. Gegenstand, insbesondere Etikett, wobei der Gegenstand ein unter ultravioletter Beleuchtung überprüfbares Sicherheitsmerkmal aufweist, wobei das Sicherheitsmerkmal eine Anordnung nach einem der Ansprüche 1 bis 12 umfasst.

14. Verfahren zum Herstellen einer Anordnung (100) für ein Sicherheitsmerkmal eines Etiketts oder eines sonstigen Gegenstands, umfassend:
- Bereitstellen einer Schicht, insbesondere einer Etikettenschicht (110) mit einer Oberseite und einer Unterseite,
- Bereitstellen eines unmagnetischen, temperaturabhängigen ersten Lumineszenzfarbstoffs (10), welcher in einem ersten Zustand einen vorgegebenen ersten Farbort (F1a) und in einem zweiten Zustand einen von dem ersten Farbort (F1a) unterschiedlichen zweiten Farbort (F1b) aufweist, und
- Aufbringen des unmagnetischen, temperaturabhängigen ersten Lumineszenzfarbstoffs (10) auf der Oberseite der Schicht, sodass der unmagnetische, temperaturabhängige erste Lumineszenzfarbstoff (10) in Abhängigkeit von einer auf ihn einwirkenden Temperaturänderung eine optisch erkennbare Farbänderung von dem ersten Farbort (F1a) hin zum zweiten Farbort (F1b) ausbildet.

15. Verfahren nach Anspruch 14, umfassend:
- Bereitstellen eines temperaturunabhängigen, zweiten Lumineszenzfarbstoffs (20), welcher einen vorgegebenen Farbort (F2) aufweist, der auf den ersten oder zweiten Farbort (F1a; F1b) des temperaturabhängigen ersten Lumineszenzfarbstoffs (10) abgestimmt ist, und
- Aufbringen des temperaturunabhängigen zweiten Lumineszenzfarbstoffs (20) auf die Oberseite der Schicht.

16. Verfahren nach Anspruch 14 oder 15, wobei der erste (10) und/oder zweite Lumineszenzfarbstoff (20) als druckfähige Substanz bereitgestellt wird und wobei das Aufbringen des ersten (10) und/oder zweiten Lumineszenzfarbstoffs (20) umfasst: Aufdrucken des ersten (10) und/oder zweiten Lumineszenzfarbstoffs (20) auf die Oberseite der Schicht.

17. Verfahren nach Anspruch 15 oder 16, wobei das Bereitstellen des temperaturabhängigen, ersten Lumineszenzfarbstoffs (10) und des temperaturunabhängigen, zweiten Lumineszenzfarbstoffs (20) umfasst:
- Ausbilden des ersten Farbortes (F1a) des temperaturabhängigen Lumineszenzfarbstoffs (10) bei Raumtemperatur unter ultraviolettem Licht,
- Ausbilden des Farbortes (F2) des temperaturunabhängigen, zweiten Lumineszenzfarbstoffs (20) bei Raumtemperatur unter ultraviolettem Licht und Anpassen des Farbortes (F2) des temperaturunabhängigen, zweiten Lumineszenzfarbstoffs (20) an den ersten Farbort (F1a) des temperaturabhängigen, ersten Lumineszenzfarbstoffs (10) bei Raumtemperatur unter ultraviolettem Licht,
- Überprüfen der jeweiligen Farborte (F1a, F2) des ersten (10) und des zweiten Lumineszenzfarbstoffs (20) bei Raumtemperatur unter Normallicht,
- iteratives Abstimmen der jeweiligen Farborte (F1', F2') beider Lumineszenzfarbstoffe (10, 20) aufeinander bei Raumtemperatur unter Normallicht und der jeweiligen Farborte (F1a, F2) beider Lumineszenzfarbstoffe (10, 20) aufeinander bei Raumtemperatur unter ultraviolettem Licht, wenn die Farborte (F1a, F2) beider Lumineszenzfarbstoffe (10, 20) unter ultraviolettem Licht und/oder die Farborte (F1', F2') beider Lumineszenzfarbstoffe (10, 20) unter Tageslicht innerhalb eines Toleranzbereichs, vorzugsweise innerhalb eines Toleranzbereichs von höchstens 10 nm, insbesondere von höchstens 5 nm, nicht oder noch nicht übereinstimmen.

18. Verfahren nach Anspruch 17, wobei das iterative Abstimmen der jeweiligen Farborte der beiden Lumineszenzfarbstoffe (10, 20) aufeinander umfasst:
- Beimischen eines weißlichen Farbpigments zu dem temperaturunabhängigen, zweiten Lumineszenzfarbstoff (20) und dadurch Ändern des zugehörigen Farbortes, insbesondere der Helligkeit, und/oder der Transparenz des temperaturunabhängigen, zweiten Lumineszenzfarbstoffs (20) und
- Überprüfen der Farborte (F1', F2'; F1a, F2) der beiden Lumineszenzfarbstoffe (10, 20) bei Raumtemperatur unter Normallicht und unter ultraviolettem Licht.

## Claims

1. An assembly (1), comprising:
- a component (3, 5, 7, 110), and
- a non-magnetic temperature-dependent, first luminescence dye (10), which in a first state has a predefined first chromaticity coordinate (F1a) and in a second state has a predefined second chromaticity coordinate (F1b) different from the first chromaticity coordinate, and which is arranged on or integrated into the component (3, 5, 7, 110) in such a way that the non-magnetic temperature-dependent, first luminescence dye develops an optically detectable color change from the first chromaticity coordinate (F1a) toward the second chromaticity coordinate (F1b) as a function of a temperature change acting on it.

2. The assembly (1) according to claim 1, wherein the non-magnetic temperature-dependent, first luminescence dye (10) has a luminescence spectrum which depends on the temperature, wherein the luminescence spectrum, its chromaticity coordinate and/or its average wavelength correspond to the first chromaticity coordinate (F1a) at a first temperature (T1) and correspond to the second chromaticity coordinate (F1b) at a different, second temperature (T2).

3. The assembly (1) according to claim 1 or 2, wherein the luminescence spectrum of the non-magnetic temperature-dependent, first luminescence dye (10) and/or its chromaticity coordinate, when passing through a temperature interval ranging from the first temperature (T1) to the second temperature (T2), pass through a continuous, steady and reversible transition between the first chromaticity coordinate (F1a) reached at the first temperature (T1) and the second chromaticity coordinate (F1b) reached at the second temperature (T2), the first temperature (T1) and the second temperature (T2) being at most as high as room temperature and being apart by at least 20 degrees Celsius, preferably at least 40 degrees Celsius.

4. The assembly (1) according to any of the claims 1 to 3, wherein the luminescence spectrum and/or its average wavelength are continuously, steadily and reversibly variable due to a temperature change by a total of at least 15 nm, preferably by a total of at least 30 nm, at least within a temperature interval lying below the room temperature of 21°C.

5. The assembly (1) according to any of the claims 1 to 4, wherein the luminescence spectrum and/or its average wavelength are continuously, steadily and reversibly variable by at least 0.5 nm per one degree Celsius temperature change at least within a temperature interval lying below the room temperature and comprising at least 15 degrees Celsius temperature difference, preferably at least 30 degrees Celsius temperature difference.

6. The assembly (1) according to any of the claims 1 to 5, comprising:
a temperature-independent, second luminescence dye (20) having a predefined chromaticity coordinate (F2) which is matched to the first chromaticity coordinate (F1a) or the second chromaticity coordinate (F1b) of the temperature-dependent, first luminescence dye (10) and constitutes a reference color for the first chromaticity coordinate (F1a) or the second chromaticity coordinate (F1b) and which is arranged on the component (3, 5, 7, 110) or integrated into the component (3, 5, 7, 110) so as to be adjacent to the temperature-dependent, first luminescence dye (10), in particular is integrated into the component (3, 5, 7, 110) so as to be adjacent to the temperature-dependent, first luminescence dye (10).

7. The assembly (1) according to claim 6, wherein the respective chromaticity coordinates of the luminescence spectra of the temperature-dependent, first luminescence dye (10) and of the temperature-independent, second luminescence dye (20) are matched to one another as a function of a predefined viewing angle.

8. The assembly (1) according to any of the claims 1 to 7, wherein the component (3, 5, 7, 110) is formed so as to be optically transparent in a spectral range extending from the first chromaticity coordinate (F1a) of the first luminescence dye (10) up to and including the second chromaticity coordinate (F1b) of the first luminescence dye (10).

9. The assembly (1; 100) according to any of the claims 6 to 8, wherein the temperature-dependent, first luminescence dye (10) and the temperature-independent, second luminescence dye (20) are matched to each other in such a way that they correspond in color to the human eye in daylight and that the chromaticity coordinates (F1a; F2) and/or the average wavelengths of their luminescence spectra under UV irradiation at room temperature match each other up to a maximum of 5 nm, whereas the chromaticity coordinates (F1b; F2) and/or the average wavelengths of their luminescence spectra under UV irradiation deviate from each other at a temperature which is at least 20°C below, preferably at least 30°C below room temperature.

10. The assembly (1) according to any of the claims 1 to 9, wherein the component (3, 5, 7, 110) is formed at least as a part of a label assembly (100), in particular as a label or as a label layer (110), or as part of a fiber (3), of a thermoplastic (5) or of a paper element (7).

11. The assembly (1) according to any of the claims 1 to 10, wherein the assembly is a label assembly (100) for a security label,
wherein the component (3, 5, 7, 110) is formed as a label layer (110), and the first, temperature-dependent luminescence dye (10) and adjacent thereto the second, temperature-independent luminescence dye (20) are arranged in or on the label layer (110), in particular on a surface of the label layer (110), for example printed or sprayed on as a dispersion pattern with a predefined geometry.

12. The assembly (100) according to any of the claims 9 to 11, comprising:
a temperature-independent, third luminescence dye (30), which is arranged on the label layer (110) or integrated into the label layer (110) so as to be adjacent to the temperature-dependent, first luminescence dye (10), wherein the temperature-independent, second luminescence dye (20) has a predefined chromaticity coordinate (F2) which is matched to one of the two chromaticity coordinates of the temperature-dependent first luminescence dye (10), in particular to the first chromaticity coordinate (F1a), in particular is adapted thereto and/or constitutes a reference color for this one chromaticity coordinate, in particular the first chromaticity coordinate (F1a), whereas the third, likewise temperature-independent luminescence dye (30) under UV irradiation has a predefined chromaticity coordinate (F3) which is matched to the other one of the two chromaticity coordinates of the temperature-dependent, first luminescence dye (10), in particular to the second chromaticity coordinate (F1b), in particular is adapted thereto and/or constitutes a reference color for this other chromaticity coordinate, in particular the second chromaticity coordinate (F1b).

13. An article, in particular a label, wherein the article comprises a security feature verifiable under ultraviolet illumination, the security feature comprising an assembly according to any one of the claims 1 to 12.

14. A method for producing an assembly (100) for a security feature of a label or any other article, including:
- providing a layer, in particular a label layer (110), having an upper side and an underside,
- providing a non-magnetic temperature-dependent, first luminescence dye (10), which in a first state has a predefined first chromaticity coordinate (F1a) and in a second state has a second chromaticity coordinate (F1b) different from the first chromaticity coordinate (F1a), and
- applying the non-magnetic temperature-dependent, first luminescence dye (10) to the upper side of the layer, so that the non-magnetic temperature-dependent, first luminescence dye (10) develops an optically detectable color change from the first chromaticity coordinate (F1a) toward the second chromaticity coordinate (F1b) as a function of a temperature change acting on it.

15. The method according to claim 14, comprising:
- providing a temperature-independent, second luminescence dye (20) having a predefined chromaticity coordinate (F2) that is matched to the first or second chromaticity coordinate (F1a; F1b) of the temperature-dependent, first luminescence dye (10); and
- applying the temperature-independent, second luminescence dye (20) to the upper side of the layer.

16. The method according to claim 14 or 15, wherein the first luminescence dye (10) and/or the second luminescence dye (20) are provided as a printable substance and wherein applying the first luminescence dye (10) and/or the second luminescence dye (20) comprises:
printing the first luminescence dye (10) and/or the second luminescence dye (20) onto the upper side of the layer.

17. The method of claim 15 or 16, wherein providing the temperature-dependent, first luminescence dye (10) and the temperature-independent, second luminescence dye (20) comprises:
- defining the first chromaticity coordinate (F1a) of the temperature-dependent luminescence dye (10) at room temperature under ultraviolet light,
- defining the chromaticity coordinate (F2) of the temperature-independent, second luminescence dye (20) at room temperature under ultraviolet light, and matching the chromaticity coordinate (F2) of the temperature-independent, second luminescence dye (20) to the first chromaticity coordinate (F1a) of the temperature-dependent, first luminescence dye (10) at room temperature under ultraviolet light,
- checking the respective chromaticity coordinates (F1a, F2) of the first luminescence dye (10) and the second luminescence dye (20) at room temperature under normal light,
- iteratively matching the respective chromaticity coordinates (F1', F2') of both luminescence dyes (10, 20) to each other at room temperature under normal light and iteratively matching the respective chromaticity coordinates (F1a, F2) of both luminescence dyes (10, 20) to each other at room temperature under ultraviolet light, when the chromaticity coordinates (F1a, F2) of both luminescence dyes (10, 20) under ultraviolet light and/or the chromaticity coordinates (F1', F2') of both luminescence dyes (10, 20) under daylight do not or do not yet match within a tolerance range, preferably within a tolerance range of at most 10 nm, in particular of at most 5 nm.

18. The method according to claim 17, wherein the process of iteratively matching the respective chromaticity coordinates of the two luminescence dyes (10, 20) to each other includes:
- admixing a whitish color pigment to the temperature-independent, second luminescence dye (20) and thereby changing the associated chromaticity coordinate, in particular the brightness, and/or the transparency of the temperature-independent, second luminescence dye (20), and
- checking the chromaticity coordinates (F1', F2'; F1a, F2) of the two luminescence dyes (10, 20) at room temperature under normal light and under ultraviolet light.

## Revendications

1. Dispositif (1), comprenant :
- un composant (3, 5, 7, 110), et
- un premier colorant luminescent (10) non magnétique dépendant de la température, qui présente un premier point de chromaticité (F1a) spécifié dans un premier état et un deuxième point de chromaticité (F1b) spécifié, différent du premier point de chromaticité, dans un deuxième état et qui est disposé au niveau du composant (3, 5, 7, 110) ou intégré dans le composant (3, 5, 7, 110) de telle manière que le premier colorant luminescent (10) non magnétique dépendant de la température opère un changement de couleur décelable optiquement depuis le premier point de chromaticité (F1a) vers le deuxième point de chromaticité (F1b) en fonction d'un changement de température qui agit sur lui.

2. Dispositif (1) selon la revendication 1, sachant que le premier colorant luminescent (10) non magnétique dépendant de la température possède un spectre de luminescence qui dépend de la température, sachant que le spectre de luminescence, son point de chromaticité et/ou sa longueur d'onde médiane correspondent au premier point de chromaticité (F1a) à une première température (T1) et correspondent au deuxième point de chromaticité (F1b) à une deuxième température (T2) différente.

3. Dispositif (1) selon la revendication 1 ou 2, sachant que le spectre de luminescence du premier colorant luminescent (10) non magnétique dépendant de la température et/ou son point de chromaticité passent, lors du passage par un intervalle de température allant de la première température (T1) à la deuxième température (T2), par une transition continue, constante et réversible entre le premier point de chromaticité (F1a) atteint à la première température (T1) et le deuxième point de chromaticité (F1b) atteint à la deuxième température (T2), sachant que la première (T1) et la deuxième température (T2) sont tout au plus aussi élevées que la température ambiante et divergent d'au moins 20 degrés Celsius, de préférence d'au moins 40 degrés Celsius.

4. Dispositif (1) selon l'une des revendications 1 à 3, sachant que le spectre de luminescence et/ou sa longueur d'onde médiane, au moins au sein d'un intervalle de température situé sous la température ambiante de 21 °C, sont modifiables d'au moins 15 nm au total, de préférence d'au moins 30 nm au total, de manière continue, constante et réversible par changement de température.

5. Dispositif (1) selon l'une des revendications 1 à 4, sachant que le spectre de luminescence et/ou sa longueur d'onde médiane, au moins au sein d'un intervalle de température situé sous la température ambiante, qui comprend au moins 15 degrés Celsius de différence de température, de préférence au moins 30 degrés Celsius de différence de température, sont variables d'au moins 0,5 nm par degré Celsius de changement de température de manière continue, constante et réversible.

6. Dispositif (1) selon l'une des revendications 1 à 5, comprenant :
un deuxième colorant luminescent (20) indépendant de la température, qui présente un point de chromaticité (F2) spécifié qui est accordé au premier (F1a) ou au deuxième point de chromaticité (F1b) du premier colorant luminescent (10) dépendant de la température et constitue une couleur de référence par rapport au premier (F1a) ou au deuxième point de chromaticité (F1b) et qui est disposé au niveau du composant (3, 5, 7, 110) ou est intégré dans le composant (3, 5, 7, 110) de manière adjacente au premier colorant luminescent (10) dépendant de la température, en particulier est intégré dans le composant (3, 5, 7, 110) de manière adjacente au premier colorant luminescent (10) dépendant de la température.

7. Dispositif (1) selon la revendication 6, sachant que les points de chromaticité respectifs des spectres de luminescence du premier colorant luminescent (10) dépendant de la température et du deuxième colorant luminescent (20) indépendant de la température sont accordés l'un à l'autre en fonction d'un angle de vue spécifié.

8. Dispositif (1) selon l'une des revendications 1 à 7, sachant que le composant (3, 5, 7, 110) est constitué de manière optiquement transparente dans une plage spectrale allant du premier point de chromaticité (F1a) du premier colorant luminescent (10) au deuxième point de chromaticité (F1b) inclus du premier colorant luminescent (10).

9. Dispositif (1 ; 100) selon l'une des revendications 1 à 8, sachant que le premier colorant luminescent (10) dépendant de la température et le deuxième colorant luminescent (20) indépendant de la température sont accordés l'un à l'autre de telle sorte qu'ils concordent en termes de couleur pour l'œil humain à la lumière du jour et que les points de chromaticité (F1a ; F2) et/ou les longueurs d'onde médianes de leurs spectres de luminescence concordent l'une avec l'autre avec une marge de maximum 5 nm sous rayonnement UV à température ambiante, tandis que les points de chromaticité (F1b ; F2) et/ou les longueurs d'onde médianes de leurs spectres de luminescence divergent l'une de l'autre sous rayonnement UV à une température qui est inférieure d'au moins 20 °C, de préférence d'au moins 30 °C, à la température ambiante.

10. Dispositif (1) selon l'une des revendications 1 à 9, sachant que le composant (3, 5, 7, 110) est constitué au moins comme partie d'un dispositif d'étiquette (100), en particulier comme étiquette ou couche d'étiquette (110), ou comme partie d'une fibre (3), d'un thermoplastique (5) ou d'un élément en papier (7).

11. Dispositif (1) selon l'une des revendications 1 à 10, sachant que le dispositif est un dispositif d'étiquette (100) pour une étiquette de sécurité,
sachant que le composant (3, 5, 7, 110) est constitué comme couche d'étiquette (110) et le premier colorant luminescent (10) dépendant de la température et de manière adjacente à celui-ci le deuxième colorant luminescent (20) indépendant de la température sont disposés, par exemple imprimés ou pulvérisés en motif dispersé d'une géométrie spécifiée, dans ou au niveau de la couche d'étiquette (110), en particulier sur une surface de la couche d'étiquette (110).

12. Dispositif (1) selon l'une des revendications 9 à 11, comprenant :
un troisième colorant luminescent (30) indépendant de la température, qui est disposé au niveau de la couche d'étiquette (110) ou intégré dans la couche d'étiquette (110) de manière adjacente au premier colorant luminescent (10) dépendant de la température, sachant que le deuxième colorant luminescent (20) indépendant de la température présente un point de chromaticité (F2) spécifié qui est accordé à l'un, en particulier premier (F1a) des deux points de chromaticité du premier colorant luminescent (10) dépendant de la température, en particulier est ajusté à celui-ci et/ou constitue une couleur de référence par rapport à ce point de chromaticité, en particulier premier (F1a), tandis que le troisième colorant luminescent (30) également indépendant de la température présente sous rayonnement UV un point de chromaticité (F3) spécifié qui est accordé à l'autre, en particulier deuxième (F1b) des deux points de chromaticité du premier colorant luminescent (10) dépendant de la température, en particulier est ajusté à celui-ci et/ou constitue une couleur de référence par rapport à cet autre, en particulier deuxième point de chromaticité (F1b).

13. Objet, en particulier étiquette, sachant que l'objet présente une caractéristique de sécurité vérifiable sous éclairage ultraviolet, sachant que la caractéristique de sécurité comprend un dispositif selon l'une des revendications 1 à 12.

14. Procédé de fabrication d'un dispositif (100) pour une caractéristique de sécurité d'une étiquette ou d'un autre objet, comprenant :
- la mise à disposition d'une couche, en particulier d'une couche d'étiquette (110), présentant une face supérieure et une face inférieure,
- la mise à disposition d'un premier colorant luminescent (10) non magnétique dépendant de la température, qui présente un premier point de chromaticité (F1a) spécifié dans un premier état et un deuxième point de chromaticité (F1b) spécifié, différent du premier point de chromaticité, dans un deuxième état, et
- l'application du premier colorant luminescent (10) non magnétique dépendant de la température sur la face supérieure de la couche de telle sorte que le premier colorant luminescent (10) non magnétique dépendant de la température opère un changement de couleur décelable optiquement depuis le premier point de chromaticité (F1a) vers le deuxième point de chromaticité (F1b) en fonction d'un changement de température qui agit sur lui.

15. Procédé selon la revendication 14, comprenant :
- la mise à disposition d'un deuxième colorant luminescent (20) indépendant de la température, qui présente un deuxième point de chromaticité (F2) spécifié qui est accordé au premier ou au deuxième point de chromaticité (F1a ; F1b) du premier colorant luminescent (10) dépendant de la température, et
- l'application du deuxième colorant luminescent (20) indépendant de la température sur la face supérieure de la couche.

16. Procédé selon la revendication 14 ou 15, sachant que le premier (10) et/ou le deuxième colorant luminescent (20) est mis à disposition comme substance imprimable et sachant que l'application du premier (10) et/ou du deuxième colorant luminescent (20) comprend : l'impression du premier (10) et/ou du deuxième colorant luminescent (20) sur la face supérieure de la couche.

17. Procédé selon la revendication 15 ou 16, sachant que la mise à disposition du premier colorant luminescent (10) dépendant de la température et du deuxième colorant luminescent (20) indépendant de la température comprend :
- la constitution du premier point de chromaticité (F1a) du colorant luminescent (10) dépendant de la température à température ambiante sous lumière ultraviolette,
- la constitution du point de chromaticité (F2) du deuxième colorant luminescent (20) indépendant de la température à température ambiante sous lumière ultraviolette et l'adaptation du point de chromaticité (F2) du deuxième colorant luminescent (20) indépendant de la température au premier point de chromaticité (F1a) du premier colorant luminescent (10) dépendant de la température à température ambiante sous lumière ultraviolette,
- la vérification des points de chromaticité (F1a, F2) respectifs du premier (10) et du deuxième colorant luminescent (20) à température ambiante sous lumière normale,
- la mise en accord itérative des points de chromaticité (F1', F2') respectifs des deux colorants luminescents (10, 20) l'un à l'autre à température ambiante sous lumière normale et des points de chromaticité (F1a, F2) respectifs des deux colorants luminescents (10, 20) l'un à l'autre à température ambiante sous lumière ultraviolette lorsque les points de chromaticité (F1a, F2) des deux colorants luminescents (10, 20) sous lumière ultraviolette et/ou les points de chromaticité (F1', F2') des deux colorants luminescents (10, 20) sous lumière du jour ne concordent pas ou pas encore au sein d'une plage de tolérance, de préférence au sein d'une plage de tolérance de tout au plus 10 nm, en particulier de tout au plus 5 nm.

18. Procédé selon la revendication 17, sachant que la mise en accord itérative des points de chromaticité respectifs des deux colorants luminescents (10, 20) l'un à l'autre comprend :
- l'adjonction d'un pigment de couleur blanchâtre au deuxième colorant luminescent (20) indépendant de la température et, de ce fait, le changement du point de chromaticité afférent, en particulier de la luminosité, et/ou de la transparence du deuxième colorant luminescent (20) indépendant de la température et
- la vérification des points de chromaticité (F1', F2' ; F1a, F2) des deux colorants luminescents (10, 20) à température ambiante sous lumière normale et sous lumière ultraviolette.
